# EUROPEAN PATENT SPECIFICATION

(11) **EP 2 544 078 B1**
(45) Date of publication and mention of the grant of the patent: **17.02.2021**
(21) Application number: 11750370.6
(22) Date of filing: 01.03.2011
(51) Int. Cl.: G06F 3/044, G06F 3/041, G06F 3/0488, G06F 1/16

(54) **Display device with adaptive capacitive touch panel**
Anzeigevorrichtung mit adaptivem kapazitivem Berührungspanel
Dispositif d'affichage avec dalle tactile capacitive adaptive

(30) Priority: 10.06.2010 JP 2010132675; 25.05.2010 JP 2010119077; 28.04.2010 JP 2010103323; 01.03.2010 JP 2010043934
(43) Date of publication of application: 09.01.2013
(73) Proprietor: Panasonic Intellectual Property Management Co., Ltd., Osaka-shi, Osaka 540-6207 (JP)
(72) Inventor: NAKAI, Jun, Osaka-shi, Osaka 540-6207 (JP)
(74) Representative: Grünecker Patent- und Rechtsanwälte PartG mbB
(86) International application number: PCT/JP2011/001187
(87) International publication number: WO 2011/108257

(56) References cited:
- CA-A1- 2 820 737
- JP-A- 10 301 695
- JP-A- 2008 033 701
- JP-A- 2008 217 704
- JP-A- 2009 181 232
- US-A1- 2004 119 484
- US-A1- 2007 279 332
- US-A1- 2009 219 175
- US-B1- 6 452 514
- US-B1- 6 466 036

## Description

### [Technical Field]

The present invention relates to a display device in which a touch panel for receiving a predetermined input from operator's touch operation is arranged in front of an image display unit to display predetermined content. In particular, the present invention relates to a display device having a touch panel applied to mobile devices such as a PND and a portable multimedia player that are often operated while being carried.

### [Background Art]

A display device having a touch panel is widely used in, for example, an in-vehicle display device or mobile devices such as a PND and a portable multimedia player, and the touch panel is arranged in front of a display unit such as a liquid crystal display or an organic EL display such that, by touching its surface, information corresponding to the touched part can be input as a signal.

As a touch panel, a capacitive touch panel that detects a capacitance change caused by operator's finger touch is widely used.

As for a display device having a conventional touch panel, there is a known capacitive touch switch that enables high touch detection accuracy of a touch panel, in which a touch operation is detected by recognizing a change in output from a plurality of electrodes (or sensors). Here, even if a sensor signal (or capacitance) drifts due to a temperature change or humidity change in a usage environment, it is known that, at this time, the capacitive touch switch updates a sensor output threshold to a value suitable for the drift thereby increases the detection accuracy (for example, see Patent Literature 1).

US 2004/0119484 A1 relates to a capacitance based human touch activation and switching device. US2007/279332 A1 relates to a display Activated by the presence of a user. JP2008217704A relates to a display device and a portable information equipment. US6466036B1 relates to a charge transfer capacitance measurement circuit. US6452514B1 relates to a capacitive sensor. CA 2 820 737 A1 relates to a display device having a capacitive touch panel in front of an image display unit, the touch panel detecting a capacitance change, the display device comprising a switch to detect that the display device is held by an operator.

US 2009/219175 A1 relates to an electronic device having: a capacitive touch panel detecting a capacitance change; a control unit that sets a threshold to be compared to a variation of a capacitance detected by the touch panel to determine whether the touch panel is operated; a switch that causes the control unit to distinguish if the display device is held by an operator wearing gloves or not wearing gloves; wherein the control unit sets the threshold to a different value according to a detection result using the switch.

### [Citation List]

### [Patent Literature]

[Patent Literature 1]
Japanese Patent Laid-Open No. 2009-181232

### [Summary of Invention]

### [Technical Problem]

In a display device having a conventional touch panel, it is possible to increase the detection accuracy by changing a threshold in a case where a sensor signal (or capacitance) drifts due to a temperature change or humidity change in a usage environment, that is, it is possible to adapt to an environment change. Instead of the environment change, however, it is not possible to adapt to a change in a sensor signal output when operator's finger stays near the touch panel before touching the touch panel.

Also, since a display device having a conventional touch panel requires a plurality of electrodes (or sensors) and needs to continuously compare outputs of these sensors with a threshold, the configuration and control become complicated in the event that the touch panel size is enlarged and find accurate detection positions are required because of increase in the number of required electrodes (or sensors) and wires for the sensors.

The present invention is made in view of the above. It is an object of the present invention to provide a display device having a touch panel that can increase the detection accuracy in a simple configuration even in a touch operation after operator's finger stays near the touch panel before touching the touch panel.

### [Solution to Problem]

One aspect of the present invention is a display device according to claim 1. Another aspect of the present invention is a display device according to claim 12. Further advantageous embodiments are defined in the dependent claims.

As described below, the present invention includes other aspects. Therefore, the disclosure of the present invention intends to provide part of aspects of the present invention and does not intend to limit the scope of the present invention described and claimed herein.

### [Brief Description of Drawings]

[Figure 1] Figure 1 is a block diagram of a PND including a display device having a touch panel according to Embodiment 1 of the present invention.
[Figure 2] Figure 2(a) is a simple appearance diagram of the PND including a display device having a touch panel according to Embodiment 1 of the present invention;
Figure 2(b) is a diagram showing a state where the PND including a display device having a touch panel according to Embodiment 1 of the present invention is held by one hand; and
Figure 2(c) is a diagram showing a state where the PND including a display device having a touch panel according to Embodiment 1 of the present invention is attached to a stand.
[Figure 3] Figure 3 is a flowchart for illustrating operations of the PND including a display device having a touch panel according to Embodiment 1 of the present invention
[Figure 4] Figure 4 is a diagram for illustrating a touch detection threshold of the PND including a display device having a touch panel according to Embodiment 1 of the present invention.
[Figure 5] Figure 5(a) is a diagram for illustrating a case where the touch detection threshold is not changed in the PND including a display device having a touch panel according to Embodiment 1 of the present invention; and
Figure 5(b) is a diagram for illustrating a case where the touch detection threshold is changed in the PND including a display device having a touch panel according to Embodiment 1 of the present invention.
[Figure 6] Figure 6 is a block diagram of a PND including a display device having a touch panel according to Embodiment 2 of the present invention.
[Figure 7] Figure 7(a) is a simple appearance diagram of the PND including a display device having a touch panel according to Embodiment 2 of the present invention; and
Figure 7(b) is a diagram showing a state where the PND including a display device having a touch panel according to Embodiment 2 of the present invention is held by one hand;
Figure 7(c) is a diagram showing a state where the PND including a display device having a touch panel according to Embodiment 2 of the present invention is held by both hands; and
Figure 7(d) is a diagram showing a state where the PND including a display device having a touch panel according to Embodiment 2 of the present invention is attached to a stand.
[Figure 8] Figure 8 is a flowchart for illustrating operations of the PND including a display device having a touch panel according to Embodiment 2 of the present invention.
[Figure 9] Figure 9(a) is a diagram for illustrating a case where a touch detection threshold is not changed in the PND including a display device having a touch panel according to Embodiment 2 of the present invention;
Figure 9(b) is a diagram for illustrating the case of detecting that an operator holds the PND including a display device having a touch panel according to Embodiment 2 of the present invention by one hand and changing the touch detection threshold in the PND; and
Figure 9(c) is a diagram for illustrating the case of detecting that an operator holds the PND including a display device having a touch panel according to Embodiment 2 of the present invention by both hands and changing the touch detection threshold in the PND.
[Figure 10] Figure 10 is a block diagram of a PND including a display device having a touch panel according to Embodiment 3 of the present invention.
[Figure 11] Figure 11 is a diagram showing a display layout example of operation icons at the time of a one-hand operation mode of the PND including a display device having a touch panel according to Embodiment 3.
[Figure 12] Figure 12 is a flowchart for illustrating operations of the PND including a display device having a touch panel according to Embodiment 3 of the present invention.
[Figure 13] Figure 13 is a block diagram of a PND including a display device having a touch panel according to Embodiment 4 of the present invention.
[Figure 14] Figure 14(a) is a simple appearance diagram of the PND including a display device having a touch panel according to Embodiment 4 of the present invention;
Figure 14(b) is a diagram showing a state where the PND including a display device having a touch panel according to Embodiment 4 of the present invention is held by one hand;
Figure 14(c) is a diagram showing a state before the PND including a display device having a touch panel according to Embodiment 4 of the present invention is attached to a stand; and
Figure 14(d) is a diagram showing a state where the PND including a display device having a touch panel according to Embodiment 4 of the present invention is attached to a stand.
[Figure 15] Figure 15 is a flowchart for illustrating operations of the PND including a display device having a touch panel according to Embodiment 4 of the present invention;
[Figure 16] Figure 16(a) is a diagram for illustrating a case where a touch detection threshold is not changed in the PND including a display device having a touch panel according to Embodiment 4 of the present invention; and
Figure 16(b) is a diagram for illustrating a case where the touch detection threshold is changed in the PND including a display device having a touch panel according to Embodiment 4 of the present invention.

### [Description of Embodiments]

Specific explanation of the present invention will be given below. However, the following specific explanation and attached drawings do not limit the present invention.

A display device of the present invention having a capacitive touch panel in front of an image display unit, the touch panel detecting a capacitance change, including: a control unit that sets a threshold to be compared to a variation of a capacitance detected by the touch panel to determine whether the touch panel is operated; and a switch that causes the control unit to detect that the display device is held by an operator, where the control unit sets the threshold to a different value according to a detection result using the switch; and wherein the control unit sets a threshold for a case where it is detected by the switch that the operator holds the display device to a value lower than a threshold for a case where it is not detected that the operator holds the display device.

With this configuration, when the display device having the touch panel is held by one hand and the touch panel is operated by a finger of the holding hand, a switch for detecting the operator's attitude detects that the device is held by one hand and a touch detection threshold of the touch panel is controlled to change by the use of the detection result. It is therefore possible to simplify a configuration of the device and the operator can operate the touch panel more reliably by a finger of the hand holding the display device having the touch panel.

In the display device of the present invention, the switch includes a first switch and a second switch, the control unit sets the threshold to a first threshold when it is detected that the first switch and the second switch are turned off, sets the threshold to a second threshold when it is detected that only the first switch is turned on, and sets the threshold to a third threshold when it is detected that both of the first switch and the second switch are turned on, where the third threshold is a value lower than the second threshold and the second threshold is a value lower than the first threshold.

With this configuration, when the display device having the touch panel is operated, detection is made as to whether the device is held by something, whether the operator holds the device by one hand or whether the operator holds the device by both hands, the detection threshold of the touch panel is changed by the use of this detection result. It is therefore possible to simplify a configuration of the device and operate the touch panel more reliably without false recognition by the device even in a state where the operator operates the display device with the touch panel while holding it by one hand or where the operator operates the display device while holding it by both hands.

The display device of the present invention has a storage unit that stores several kinds of icon layouts, in which the control unit sets the threshold to a different value according to the detection result using the switch and displays the icon layout corresponding to the detection result using the switch on the image display unit.

With this configuration, when the display device having the touch panel is held by one hand and the touch panel is operated by a finger of the holding hand, a switch for detecting the operator's attitude detects that the device is held by one hand and a detection threshold of the touch panel is controlled to change by the use of the detection result. It is therefore possible to simplify a configuration of the device and the operator can operate the touch panel more reliably by a finger of the hand holding the display device having the touch panel.

A display device of the present invention having a capacitive touch panel in front of an image display unit, the touch panel detecting a capacitance change, including: a control unit that sets a threshold to be compared to a variation of a capacitance detected by the touch panel to determine whether the touch panel is operated; and a switch that causes the control unit to detect that the display device is attached to a stand, where the control unit sets the threshold to a different value according to a detection result using the switch, and wherein the control unit sets a threshold for a case where it is detected by the switch that the display device is attached to the stand to a value greater than a threshold for a case where it is not detected that the display device is attached to the stand.

With this configuration, when the display device having the touch panel is manipulated while it is attached to the stand provided in a vehicle, whether the display device is attached to the stand is detected and the detection threshold of the touch panel is controlled to change by the use of the detection result. It is therefore possible to simplify a configuration of the device and provide a display device without false operations even if the operator unintentionally crosses the periphery of the display device having the touch panel.

In the following, a display device having a touch panel according to an embodiment of the present invention will be explained using the drawings. However, in the following explanation, a PND (Portable Navigation Device or Personal Navigation Device) will be exemplified as a display device having a touch panel. The PND according to the present embodiment has a navigation function of routing assistance, an AV playback function including a playback of music and video recorded in a storage unit or a recording medium such as a memory card, and so on.

### (Embodiment 1)

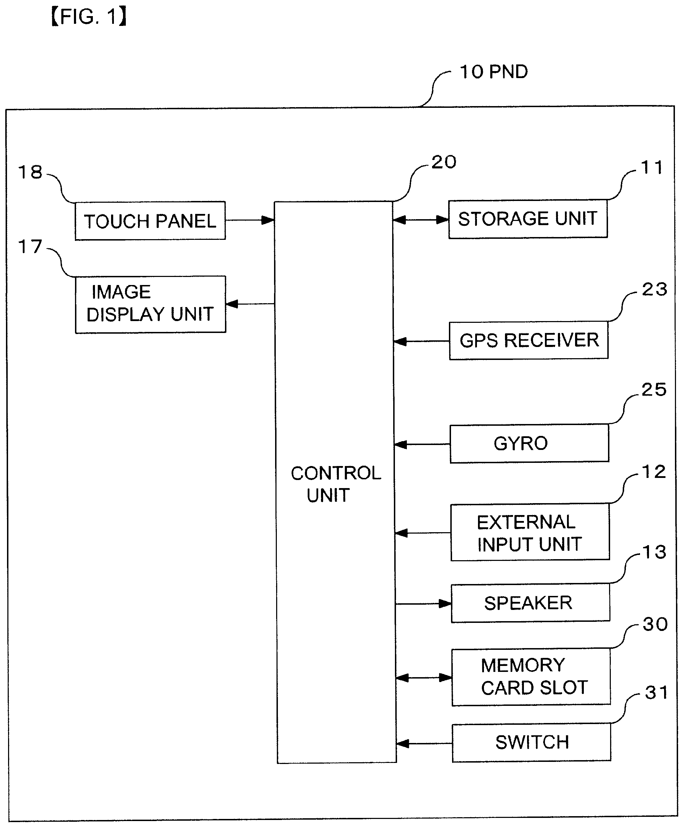

Figure 1 is a block diagram showing a display device having a touch panel according to Embodiment 1 of the present invention. In Figure 1, a PND 10 is provided with a storage unit 11, an external input unit 12, a speaker 13, an image display unit 17, a touch panel 18, a control unit 20, a GPS receiver 23, a gyro 25, a memory card slot 30 and a switch 31.

It is noted that the GPS receiver 23, the gyro 25 and the speaker 13 need not be integrally provided in the PND 10 and may be configured to be electrically connectable to and detachable from the PND 10.

The storage unit 11 is a data storage device such as an HDD, an SD card and a flash memory mounted on a printed circuit board in a PND in-vehicle device, and may adopt one kind or multiple kinds of them.

The storage unit 11 stores data related to a shape of an icon displayed in the image display unit 17 or a basic program required to control operations of the PND, and, furthermore, stores various programs and databases such as a program to control the image display unit or an image display, application software used to perform a navigation function or a playback function of a moving image and music stored in a memory card inserted in a memory card slot, and a database related to a map for navigation or a telephone number database.

Also, similar to a general storage device, the storage unit 11 is provided with an area for expanding various kinds of programs and data and an area for expanding an image.

The external input unit 12 is an interface such as a connector provided to input a signal output from an external device connectable to the PND 10 and a level shifter for an input signal level, and can input video signals and sound signals acquired by reproducing media such as DVD and CD or video signals and sound signals from a digital television or the like.

The speaker 13 is provided to output: sound effects to communicate to an operator that the PND 10 accepts an operation for the PND 10; sound input from an external device to the external input unit 12; and music or sound stored in a memory card inserted in the memory card slot 30.

The image display unit 17 is provided to display on a screen: an opening screen or menu screen stored in the storage unit 11; a video or still image input from the external device to the external input unit 12; and various kinds of data such as moving images and still images stored in a memory card inserted in the memory card slot 30, and, in the present embodiment, a general liquid crystal display is used.

That is, the image display unit 17 is configured including: a liquid crystal panel including a polarization filter, a liquid crystal and a glass substrate; a component used as a light source for a cold cathode tube or a crystal panel such as an LED and a light guide board; an electronic component such as an IC to control various signals for image display; and a power supply unit to drive the liquid crystal, the light source and the electronic component. Here, in this case, the power supply unit may be separately provided from the image display unit 17.

The touch panel 18 is a transparent panel provided on a surface of the image display unit 17, and, when an operator operates a corresponding part (such as a position of an icon displayed on the image display unit in the case of icon display and an arbitrary place in the case of map display) of the touch panel 18 (i.e. when the operator touches or approaches to a corresponding part), the touch panel 18 outputs information of the operated position and information of capacitance variation caused by the operation to the control unit 20. By this means, an input operation to the PND 10 is performed.

The control unit 20 includes a microprocessor and an electric circuit to operate the microprocessor, executes a control program stored in the storage unit 11 and performs various kinds of control processing. Further, the control unit 20 performs control processing so as to display image data, which is acquired as a result of control processing, on the display unit 17.

Further, the control unit 20 acquires signals (i.e. information of the operated position and information of the capacitance variation caused by the operation) from the touch panel 18, calculates a position touched by the operator's finger on the touch panel based on these signals and checks information of the calculated position against information of a touch area of the touch panel 18 stored in the storage unit 11. After that, the control unit 20 executes a function defined by, for example, an icon, menu or switch associated in advance with a touch area corresponding to the position touched by the operator's finger.

Further, the control unit 20 changes a touch detection threshold of the touch panel 18 by a signal from the switch 31.

Here, the touch detection threshold is a value compared with the capacitance variation detected in the touch panel 18 so as to determine whether the operator touches (i.e. operates) the touch panel 18.

Also, the number of microprocessors used for the control unit 20 may be one or a plurality of microprocessors may be used for a function of calculating a position touched by the operator's finger on the touch panel or a navigation function.

The GPS receiver 23 is provided to receive a signal from a GPS satellite.

The gyro 25 is provided to detect the rotation amount, variation in vertical directions or acceleration of the PND 10.

The memory card slot 30 is provided to insert a memory card.

The switch 31 is provided to detect that the operator performs an operation by one hand and is arranged in a position to which the operator's hand touches or approaches when the operator holds the PND 10.

The switch 31 may be configured as, for example, a mechanic type of generating different signals according to whether the switch 31 is held down (or pressed), a type using a transmissive photo interrupter for generating different signals according to whether light is interrupted, or a type using a reflective photo sensor that detects whether the operator's hand is found by reflecting light to the operator's hand.

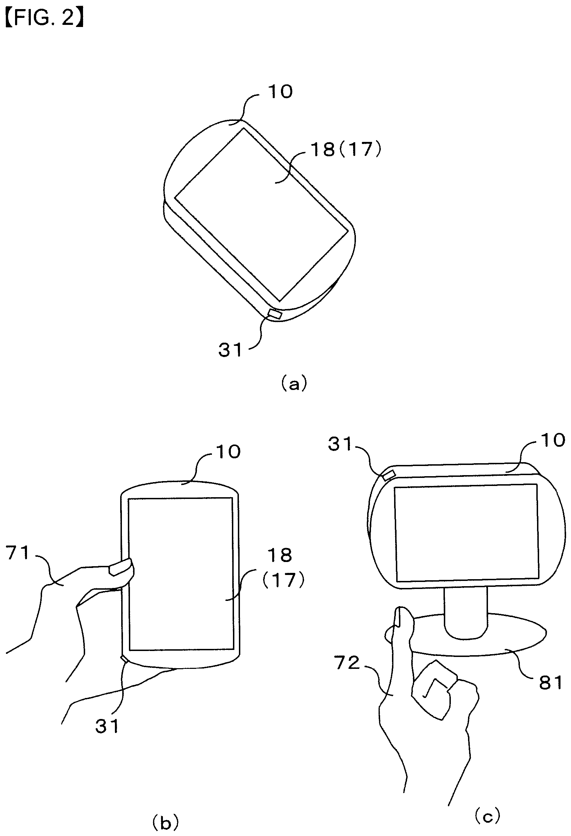

Regarding the PND 10 configured as above, operations will be explained using Figure 2 to Figure 5.

Figure 2 is a simple configuration diagram for explaining usage patterns of the PND 10 according to Embodiment 1 of the present invention.

It is assumed that the PND 10 according to the present embodiment serves dual purposes of a navigation device for pedestrians and an in-vehicle navigation device. That is, both cases are considered where the PND 10 is used by a user (or operator) while walking and where the PND 10 is taken to a vehicle, fixed to a predetermined place in the vehicle and used while the vehicle is moving.

In particular, for example, when the PND 10 is used by a user while walking, the user directly holds the PND 10 in a palm side of a hand and operates the PND 10.

In this case, since the touch panel 18 of the PND 10 is a capacitive touch panel, an operator's finger may cover the touch panel 18 when operating the PND 10, and, at that time, the capacitance value detected by the PND 10 slightly changes.

Meanwhile, when the user takes the PND 10 to a vehicle, normally, after the PND 10 is fixed to a dashboard or the like in the vehicle, the user operates or views the PND 10.

In this case (i.e. in the case of mounting the PND 10 on the vehicle and using the PND 10), since the PND 10 is fixed to a specific position such as a dashboard, except for when the operator intentionally operates the PND 10, a situation does not arise in operations of the PND 10 where an operator's finger covers the PND 10.

Taking into account these two main categories, the PND 10 according to the present embodiment is configured to separately recognize a state where the user directly holds the PND 10 in a palm side of a hand and uses the PND 10 (hereinafter an operation mode of the PND 10 in this state is referred to as "one-hand operation mode") and a state where the user fixes (or simply places) the PND 10 to a specific position and uses the PND 10 (hereinafter an operation mode of the PND 10 in this state is referred to as "stationary operation mode").

The switch 31 provided in the PND 10 is provided to identify the above two modes and switches signals between a state where the switch 31 is pressed (i.e. "ON" state) and a state where the switch 31 is not pressed (i.e. "OFF" state), and the control unit 20 recognizes this changeover, determines whether the current mode is the one-hand operation mode or the stationary operation mode, and performs control processing based on the determination result.

Therefore, the switch 31 is provided in an outer margin of the PND 10 in a state where the PND 10 is viewed from the front (i.e. anterior view) when using the PND 10 (see Figure 2), and, especially in the example shown in Figure 2, the switch 31 is provided in the lower left in a state where the PND 10 is viewed from the front when the user operates the PND 10 by one hand (see Figure 2(b)).

Here, the outer margin denotes an external margin of the device (i.e. PND 10) outside the display unit 17, including an outer part in the side or rear surface of the device.

In the present embodiment, it is set in advance that the control unit 20 recognizes the one-hand operation mode in a period during which the switch 31 is pressed and the stationary operation mode in other periods (i.e. a period during which the switch 31 is not pressed).

Thus, regarding the PND 10 according to the present embodiment whose operations have been roughly explained, the detailed operations will be explained below.

Figure 2(a) shows a configuration of the PND 10 alone according to Embodiment 1 and shows a state where the PND 10 has the image display unit 17 and the touch panel 18 is provided in front of the image display unit 17. Further, the figure shows that the switch 31 to detect a one-hand operation is provided on the PND 10.

Figure 2(b) shows one example of the one-hand operation mode and is used for explaining that the PND 10 is held by one hand and operated by a finger of the holding hand. Further, Figure 2(b) shows that the operator holds the PND 10 by one hand so that it is possible to turn on the switch 31 of the PND 10 and touch and operate the touch panel 18 by a finger 71 of the holding hand.

Figure 2(c) shows one example of the stationary operation mode and is a diagram for explaining a case where the PND 10 is installed and used in a vehicle interior or living space. Further, Figure 2(c) shows that, in a case where the PND 10 is attached to a stand 81, the operator can touch and operate the touch panel 18 of the PND 10 attached to the stand 81 by a finger 72.

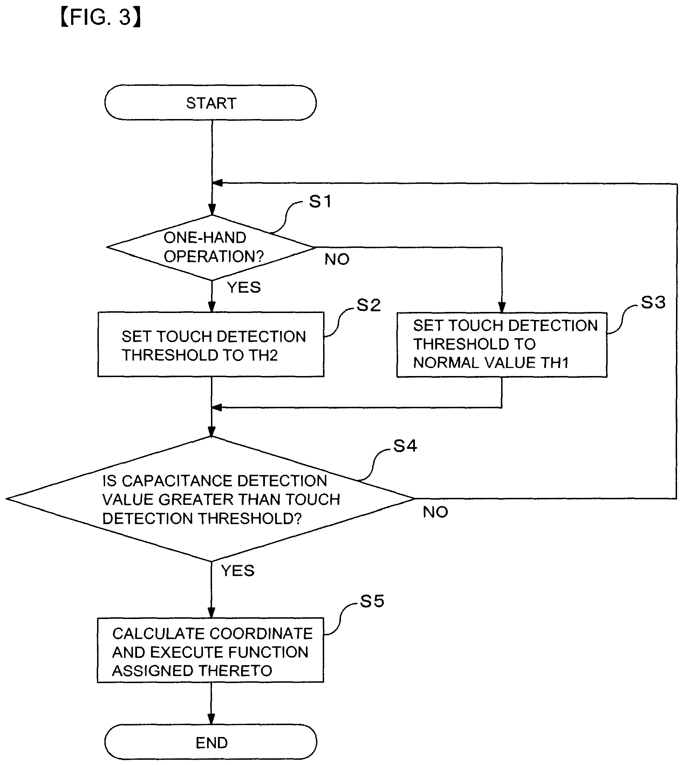

Next, operations of the PND 10 will be explained using Figure 3. In the PND 10 according to the present embodiment, although a general capacitive touch panel is used as the touch panel 18, generally, a capacitive touch panel detects a capacitance change caused by a finger approaching the touch panel and recognizes that the operator touches the touch panel when the capacitance change is equal to or greater than a touch detection threshold.

Here, the touch detection threshold denotes a value whereby the control unit recognizes that the operator operates the touch panel when a capacitance caused by a finger approaching the touch panel exceeds this touch detection threshold. In the present embodiment, by changing this touch detection threshold between the one-hand operation mode and the stationary operation mode, it is possible to prevent a false operation caused by covering the touch panel 18 with an operator's finger at the time of the one-hand operation mode.

Also, in the following explanation, it is assumed that a touch detection threshold used for control in the stationary operation mode is TH1 and a touch detection threshold used for control in the one-hand operation mode is TH2.

First, operations will be explained in a case where the PND 10 is attached to the stand 81 (i.e. stationary operation mode).

The operations start from a state where nothing touches the touch panel 18 (corresponding to a start state in Figure 3). After processing starts, the control unit 20 determines an operation mode (step S1), that is, in a case where the PND 10 is attached to the stand 81, the control unit 20 detects that the switch 31 is turned off since the switch 31 is not pressed, and the control unit 20 determines that the PND 10 is not in the one-hand operation mode but in the stationary operation mode (step S1: NO).

As a result of the determination, since the PND 10 is not in the one-hand operation mode but in the stationary operation mode, the control unit 20 sets a touch detection threshold to TH1 (step S3).

When the operator touches the touch panel 18 and a capacitance detection value (i.e. capacitance variation) exceeds the touch detection threshold (or TH1 in this case), the control unit 20 determines this excess (step 4: YES), calculates a coordinate at which the operator touches the touch panel 18, and reads a function assigned to the coordinate from the storage unit 11 to execute the function (step S5).

When the capacitance detection value does not exceed the touch detection threshold (step S4: NO), the flow returns to determination processing as to whether the operation mode is the one-hand operation mode (step S1).

Next, operations will be explained in a case where the PND 10 is held by one hand and operated by the finger 71 of the holding hand (i.e. one-hand operation mode).

The operations start from a state where nothing touches the touch panel 18 (corresponding to a start state in Figure 3). When the PND 10 is held by one hand of the operator, the switch 31 is pressed and turned on and the control unit 20 detects a state of the switch 31 and determines that the PND 10 is in the one-hand operation mode (step S1: YES).

When the control unit 20 determines that the operation mode is the one-hand operation mode, the control unit 20 sets the touch detection threshold to TH2.

When the operator touches the touch panel 18 by the finger 71 of the hand holding the PND 10 and a capacitance detection value exceeds the touch panel detection threshold (or TH2 in this case), the control unit 20 determines this (step S4: YES), calculates a coordinate at which the operator touches the touch panel 18, reads a function assigned to the coordinate from the storage unit 11 and executes the function (step S5).

After the control unit 20 determines the one-hand operation mode as the operation mode and sets the touch detection threshold to TH2, when the capacitance detection value does not exceed the touch detection threshold (or TH2 in this case) (step S4: NO), whether the operation mode is the one-hand operation mode is determined (step S1).

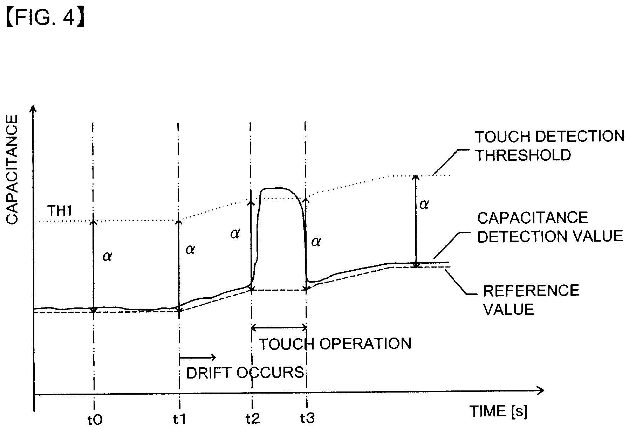

Next, using Figure 4, a touch detection threshold and a capacitance detection value in the stationary operation mode will be explained.

When t0 is set to the OFF time of the switch 31, that is, when t0 is set to a given time at which the operator performs no operation after the PND 10 is attached to the stand 81, the touch detection threshold TH1 at time t0 is set to a value obtained by adding a constant value α to a reference value in the control unit 20.

The capacitance detection value slightly and gradually drifts by a usage environment change of the capacitive touch panel such as a temperature change and humidity change. Therefore, the control unit 20 sets the reference value in advance so as to change according to a gradual drift by a usage environment change of the capacitive touch panel.

The drift occurrence time is set to t1 and the control unit 20 performs control so as to set the touch detection threshold TH1 at time t1 to a value obtained by adding the constant value α to the reference value and gradually change the touch detection value TH1 according to a change of the reference value at the time of drift occurrence.

The time at which the operator touches the touch panel 18 is set to t2 and the time at which the operator lifts an operator's finger off the touch panel 18 is set to t3.

At time t2 at which the operator touches the touch panel 18, the capacitance detection value largely changes in a short period of time compared to a drift change caused by an environment change. At this time, the control unit 20 does not change the reference value, the capacitance detection value exceeds the touch detection threshold TH1 and the control unit 20 determines this.

While the control unit 20 determines that the capacitance detection value exceeds the touch detection threshold TH1, the control unit 20 does not change the reference value.

At time t3 at which the operator lifts an operator's finger off the touch panel 18, the capacitance detection value largely changes in a short period of time compared to a drift change caused by an environment change and becomes smaller than the touch detection threshold.

After the control unit 20 determines that the capacitance detection value becomes smaller than the touch detection value, the control unit 20 performs control again so as to change the touch detection threshold TH1 according to a change of the reference value.

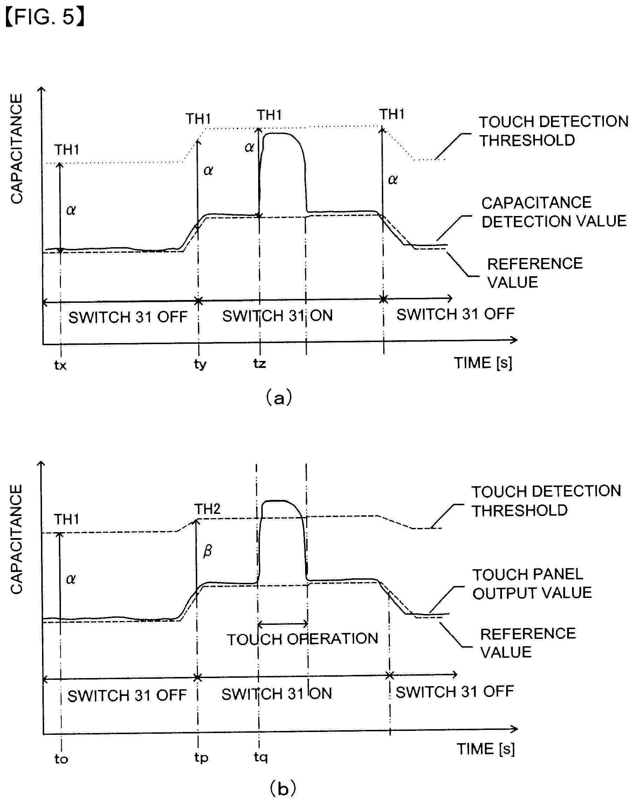

Next, a touch detection threshold and a capacitance detection value in the one-hand operation mode will be explained using Figure 5.

Figure 5(a) is a diagram showing a case where the touch detection threshold TH1 is constant and Figure 5(b) is a diagram showing a case where the touch detection threshold is changed to one of two values of the touch detection threshold TH1 and a touch detection threshold TH2.

Although the PND 10 according to the present embodiment changes the touch detection threshold to one of the values TH1 and TH2 at the time of the one-hand operation mode, for ease of understanding, first, a harmful effect that can be caused in a case where the touch detection threshold is not changed but is fixed to TH1, will be explained using Figure 5(a).

At time "tx," when the switch 31 is turned off, a value obtained by adding α to the reference value is set as the touch detection threshold TH1.

After that, at time "ty," when the operator holds the PND 10 by one hand and tries to operate the PND 10 by the finger 71 of the holding hand, the switch 31 is turned on, the capacitance detection value increases by the capacitance of the finger 71 of the holding hand and the control unit 20 changes the reference value according to the change of the capacitance detection value. The control unit 20 similarly changes the touch detection threshold TH1 adding α to the reference value.

In this state, at subsequent time "tz," even if the operator touches the touch panel 18 by the finger 71 of the hand holding the PND 10 and the capacitance detection value largely changes in a short period of time, the capacitance detection value does not exceed the touch detection threshold. Therefore an operator's touch operation is not detected and the PND 10 cannot accept an operator's intended operation.

That is, when the operator holds the PND 10 by one hand and uses the PND 10, an operator's finger stays near the touch panel 18 before touching the touch panel, and the capacitance detection value increases by the capacitance of the finger 71 of the hand holding the PND 10. Therefore, in a case where a value (i.e. touch detection threshold TH1) adding α to the reference value in a simple manner is set as a touch detection threshold without taking into account the increment, even if the operator touches the touch panel 18, the touch detection value at the time of touch does not exceed the touch detection threshold (or the touch detection threshold TH1 in this case), and therefore the operation becomes invalid.

Therefore, by switching touch detection thresholds, the PND 10 according to the present embodiment performs control while increasing the detection accuracy. The details are as follows. Figure 5(b) shows a case where the touch detection threshold is switched from the TH1 to TH2.

At time "to," when the switch 31 is turned off, a value obtained by adding α to the reference value is set as the touch detection threshold TH1.

At time "tp," when the operator holds the PND by one hand and tries to operate the PND by the finger 71 of the holding hand, as shown in Figure 2(b), the switch 31 of the PND 10 is pressed by the operator and therefore the switch 31 is turned on. Accordingly, the capacitance detection value increases by the capacitance of the finger 71 of the holding hand and the control unit 20 changes the reference value according to the change of the capacitance detection value.

When the switch 31 is turned on, the control unit 20 sets a value obtained by adding β, which is lower than α, to the reference value, as the touch detection value TH2.

At time "tq," when the operator touches the touch panel 18 by the finger 71 of the hand holding the PND 10, the capacitance detection value exceeds the touch detection threshold TH2 and therefore the operator's touch operation is detected.

In a case where a capacitive touch panel is used, normally, it is necessary to increase a difference between the reference value and the touch detection threshold in some degree such that a false operation is not caused when, for example, a human gets across the vicinity of the touch panel.

In the case of the present embodiment, when the touch switch 31 is turned on, although the capacitance detection value increases according to an influence of the finger 71 of the hand holding the PND, this is caused by the operator's intended operation. Therefore, by switching touch detection thresholds between modes and setting a small difference between the reference value and the touch detection threshold, the capacitance detection value reliably exceeds the touch detection threshold, and therefore it is possible to perform a touch operation as intended by the operator.

As described above, the present embodiment is provided with a capacitive touch panel, a switch for detecting a one-hand operation, a storage unit to store a touch detection threshold and a control unit to control the touch detection threshold, and, by changing the touch detection threshold according to an output of the switch that can detect the one-hand operation, the operator can operate the touch panel more reliably by the finger 71 of the hand holding a PND including a display device having the touch panel.

It should be noted that an installation location of the switch 31 in the present embodiment may be the lower right side of the PND (i.e. the lower right side of the PND in the direction shown in Figure 2(b)), and, in a case where the switch 31 is installed in the lower right, it is possible to hold the PND 10 by the right hand and operate the touch panel by a finger of the holding right hand.

Further, a plurality of the switches 31 may be provided and, in a case where the switches 31 are provided in the right and left parts, it is possible to operate the PND 10 by the right hand as well as the left hand as the operator likes.

Also, since it is generally expected to operate a portable device such as the PND 10 by one hand, although a one-hand operation has been exemplified and explained in the present embodiment, the PND 10 is not necessarily operated only by one hand, and it may be possible to press the switch 31 by one hand and perform an operation by the other hand.

### (Embodiment 2)

In the following, a display device according to another embodiment will be explained. A display device having a conventional capacitive touch panel provides different sensor signal outputs in the vicinity of the touch panel between the case of holding the device by one hand and the case of holding the device by both hands, and therefore corresponding touch operations cannot be distinguished, while a display device according to this Embodiment 2 has a touch panel such that, even in a touch operation after an operator's finger stays near the touch panel before touching the touch panel, it is possible to increase the detection accuracy in a simple configuration and distinguish touch operations corresponding to the case of holding the device by one hand and the case of holding the device by both hands.

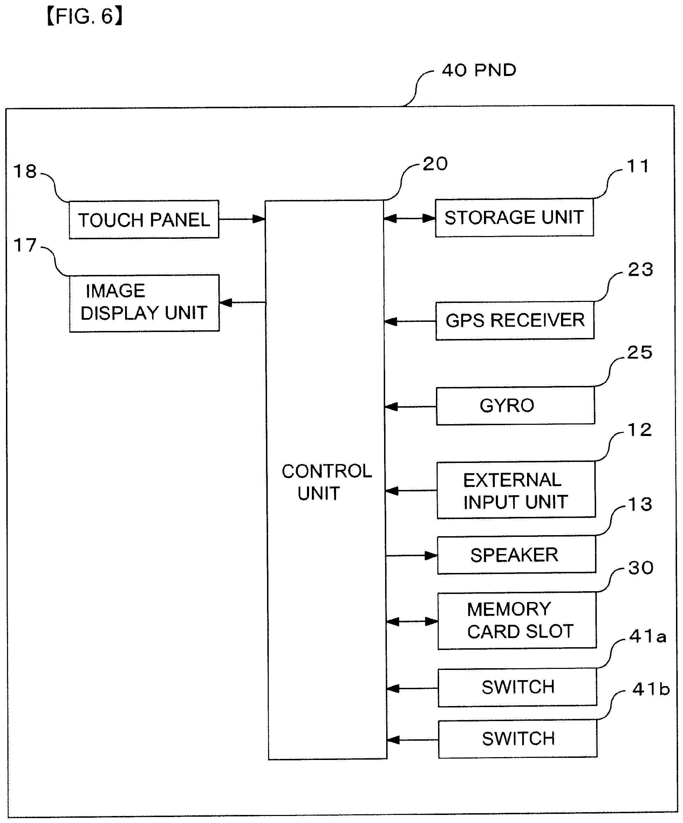

Figure 6 is a block diagram of a display device having a touch panel according to Embodiment 2. It should be noted that, when the same members as in above Embodiment 1 are used in the following explanation, the same reference numerals will be assigned to the members and their explanation will be omitted.

In Figure 6, a PND 40 is provided with the storage unit 11, the external input unit 12, the speaker 13, the image display unit 17, the touch panel 18, the control unit 20, the GPS receiver 23, the gyro 25, the memory card slot 30, a switch 41a as a first switch and a switch 41b as a second switch.

The switches 41a and 41b are provided to detect whether the operator holds (or holds and operates) the PND 40 by one hand or the operator holds (or holds and operates) the PND 40 by both hands, and are arranged in positions to which the operator's hand touches or approaches when the operator holds the PND 40.

The switches 41a and 41b may be configured as, for example, a mechanic type of generating different signals according to whether the switches 41a and 41b are held down (or pressed), a type using a transmissive photo interrupter for generating different signals according to whether light is interrupted, or a type using a reflective photo sensor that detects whether the operator's hand is found by reflecting light to the operator's hand.

The control unit 20 changes a touch detection threshold of the touch panel 18 by signals from the switches 41a and 41b.

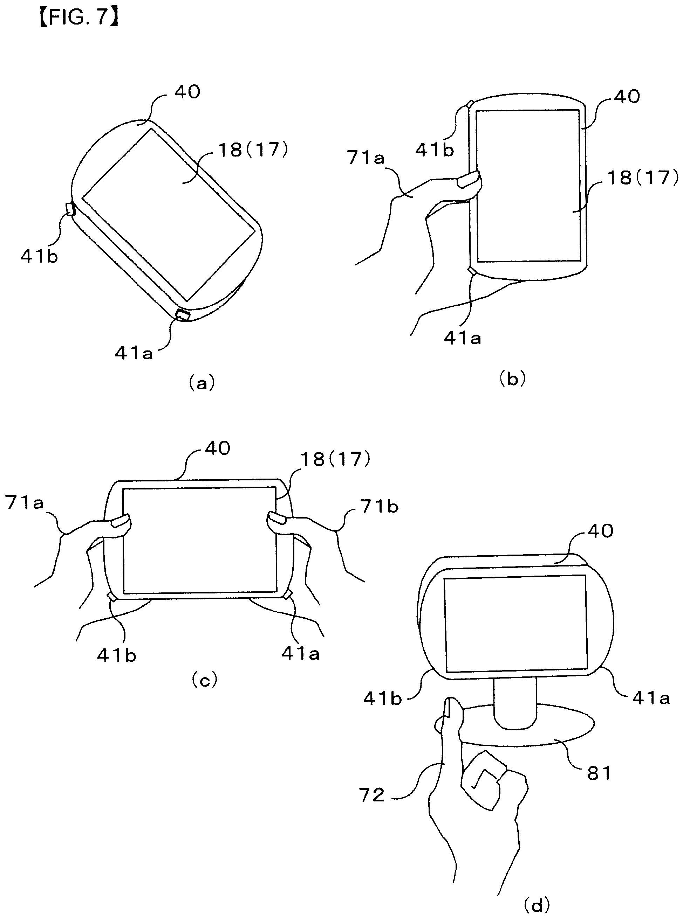

Regarding the PND 40 configured as above, operations will be explained using Figure 7 to Figure 9.

Figure 7 is a simple configuration diagram for explaining usage patterns of the PND 40 according to Embodiment 2 of the present invention.

It is assumed that the PND 40 according to the present embodiment serves dual purposes of a navigation device for pedestrians and an in-vehicle navigation device. That is, both cases are considered where the PND 40 is used by a user (or operator) while walking and where the PND 40 is taken to a vehicle, fixed to a predetermined place in the vehicle and used while the vehicle is moving.

Further, in the case where the PND 40 is used by the user (or operator) while walking, a difference is considered between a case where the user holds and operates the PND 40 by one hand and a case where the user holds and operates the PND 40 by both hands.

In particular, for example, when the PND 40 is used by the user while walking, the user directly holds the PND 10 in a palm side of a hand and operates the PND 40.

Here, since the touch panel 18 of the PND 40 is a capacitive touch panel, an operator's finger may cover the touch panel 18 when operating the PND 40, and, at that time, the capacitance value detected by the PND 40 slightly changes.

Also, at that time, when comparing a case where the touch panel 18 is covered only with a finger of operator's one hand and a case where the touch panel 18 is covered with fingers of operator's both hands, the capacitance value variation is different between these cases.

Further, when the user takes the PND 40 to a vehicle, normally, after the PND 40 is fixed to a dashboard or the like in the vehicle, the user operates or views the PND 40. In this case (i.e. in the case of mounting the PND 40 on the vehicle and using the PND 40), since the PND 40 is fixed to a specific position such as a dashboard, except for when the operator intentionally operates the PND 40, a situation does not arise in operations of the PND 40 where an operator's finger covers the PND 40.

Taking into account these three main categories, the PND 40 according to the present embodiment is configured to separately recognize: a state where the user directly holds the PND 40 in a palm side of a hand and uses the PND 40 (hereinafter an operation mode of the PND 40 in this state is referred to as "one-hand operation mode"); a state where the user directly holds the PND 40 in a palm side of hands and uses the PND 40 (hereinafter an operation mode of the PND 40 in this state is referred to as "both-hands operation mode"); and a state where the user fixes (or simply places) the PND 40 to a specific position and uses the PND 40 (hereinafter an operation mode of the PND 40 in this state is referred to as "stationary operation mode").

The switch 41 (i.e. 41a and 41b) provided in the PND 40 is provided to identify the above two modes and switches signals between a state where the switch 41 is pressed (i.e. "ON" state) and a state where the switch 41 is not pressed (i.e. "OFF" state), and the control unit 20 recognizes this changeover, determines in which of the one-hand operation mode, the both-hands operation mode and the stationary operation mode the current mode is, and performs control processing based on the determination result.

Therefore, the switch 41 is provided in an outer margin of the PND 40 in a state where the PND 40 is viewed from the front (i.e. anterior view) when using the PND 40 (see Figure 7), and, especially in the example shown in Figure 7, the switches 41a and 41b are provided in the lower left and the lower right, respectively, in a state where the PND 40 is viewed from the front when the user operates the PND 40 by one hand (see Figure 7(b)) .

Here, the outer margin denotes an external margin of the device (i.e. PND 40) outside the display unit 17, including an outer part in the side or rear surface of the device.

In the present embodiment, it is set in advance that the control unit 20 recognizes the one-hand operation mode in a period during which the switch 41a or 41b is pressed, the both-hands operation mode in a period during which the switches 41a and 41b are both pressed, and the stationary operation mode in other periods (i.e. a period during which the switch 41 is not pressed).

Thus, regarding the PND 40 according to the present embodiment whose operations have been roughly explained, the detailed operations will be explained below.

Figure 7(a) shows a configuration of the PND 40 alone according to Embodiment 1 and shows a state where the PND 40 has the image display unit 17 and the touch panel 18 is provided in front of the image display unit 17. Further, the figure shows that the switch 41 to detect a one-hand operation is provided on the PND 40.

Figure 7(b) shows one example of the one-hand operation mode and is used for explaining that the PND 40 is held by one hand and operated by a finger of the holding hand. Further, Figure 7(b) shows that the operator holds the PND 40 by one hand so that it is possible to turn on the switch 41a (or 41b) of the PND 40 and touch and operate the touch panel 18 by the finger 71 of the holding hand.

Figure 7(c) shows one example of the both-hands operation mode and is used for explaining that the PND 40 is held by both hands and operated by fingers of the holding hands. Further, Figure 7(c) shows that the operator holds the PND 40 by both hands so that it is possible to turn on the switches 41a and 41b of the PND 40 and touch and operate the touch panel 18 by a finger 71a or 71b of the holding hands.

Figure 7(d) shows one example of the stationary operation mode and is a diagram for explaining a case where the PND 40 is installed and used in a vehicle interior or living space. Further, Figure 7(d) shows that, in a case where the PND 40 is attached to the stand 81, the operator can touch and operate the touch panel 18 of the PND 40 attached to the stand 81 by the finger 72.

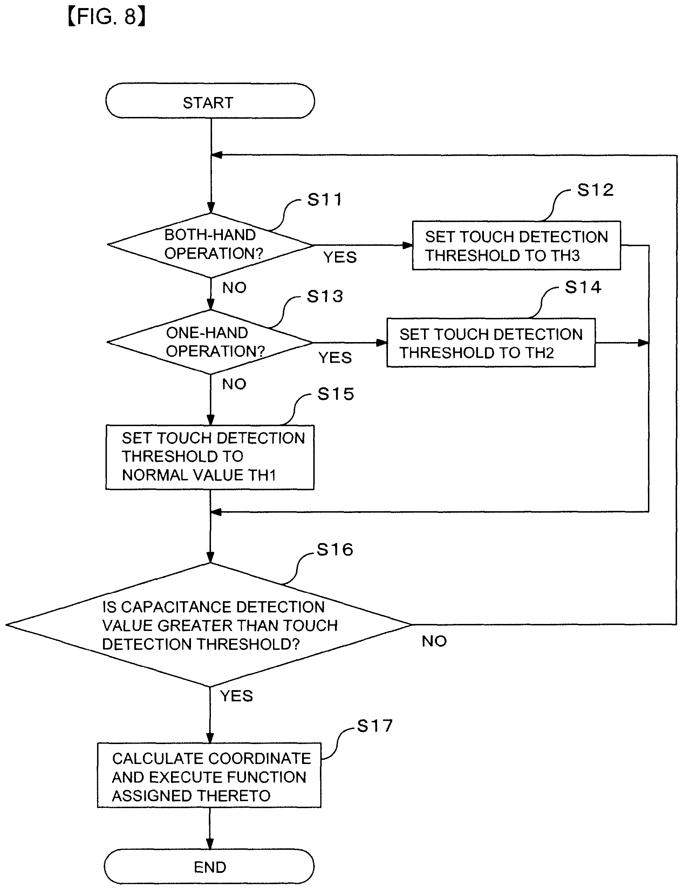

Next, operations of the PND 40 will be explained using Figure 8. In the PND 40 according to the present embodiment, although a general capacitive touch panel is used as the touch panel 18, generally, a capacitive touch panel detects a capacitance change caused by a finger approaching the touch panel and recognizes that the operator touches the touch panel when the capacitance change is equal to or greater than a touch detection threshold.

Here, the touch detection threshold denotes a value whereby the control unit recognizes that the operator operates the touch panel when a capacitance caused by a finger approaching the touch panel exceeds this touch detection threshold. In the present embodiment, by changing this touch detection threshold between the one-hand operation mode, the both-hands operation mode and the stationary operation mode, it is possible to prevent a false operation caused by covering the touch panel 18 with an operator's finger at the time of each operation mode.

Also, in the following explanation, it is assumed that a touch detection threshold used for control in the stationary operation mode is TH1, a touch detection threshold used for control in the one-hand operation mode is TH2 and a touch detection threshold used for control in the both-hands operation mode is TH3.

First, the operations start from a state where nothing touches the touch panel 18 (corresponding to a start state in Figure 8). When the main power supply of the PND 40 is turned on and the control unit 20 starts processing, the control unit 20 determines an operation mode.

That is, first, the control unit 20 detects states of the switches 41a and 41b and determines whether the operator performs an operation (or holds the PND) by both hands (step S11).

In step S11, when it is determined that both the switches 41a and 41b are pressed (i.e. the switches 41 are turned on), this shows a state where the user operates (or holds) the PND by both hands (step S11: YES), and the flow proceeds to the next processing. The control unit 20 sets the touch detection threshold to TH3 (step S12) and determines an operation mode of the PND as the both-hands operation mode.

In step S11, when it is determined that one of the switches 41a and 41b is not pressed (i.e. one of the switches 41 is turned off), this shows a state where the user does not operate (or hold) the PND by both hands (step S11: NO), and the flow proceeds to the next processing.

When "NO" is determined in step S11, the control unit 20 determines whether the operator performs an operation (or holds the PND) by one hand (step S13).

In step S13, when it is determined that only one of the switches 41a and 41b is pressed (i.e. only one of the switches 41 is turned on), this shows a state where the user operates (or holds) the PND by one hand (step S13: YES), and the flow proceeds to the next processing. The control unit 20 sets the touch detection threshold to TH2 (step S14) and determines an operation mode of the PND as the one-hand operation mode.

In step S13, when it is determined that none of the switches 41a and 41b is pressed, since this shows a state where the user does not operate (or hold) the PND by one hand or both hands (step S13: NO), the control unit 20 sets the touch detection threshold to the normal value TH1 (step S15) and determines an operation mode of the PND as the stationary operation mode.

In a case where a touch detection threshold is set in each of steps S12, S14 and S15, a capacitance of the touch panel 18 is detected in the state and it is determined whether the detected capacitance value exceeds the touch detection threshold set in each step (step S16). When the operator touches the touch panel 18 and the capacitance detection value (i.e. capacitance variation) exceeds the set touch detection threshold, the control unit 20 determines this excess, calculates a coordinate at which the operator touches the touch panel 18, and reads a function assigned to the coordinate from the storage unit 11 to execute the function (step S17).

When the capacitance detection value does not exceed the touch detection threshold (step S16: NO), the flow returns to determination processing as to whether the operation mode is the both-hands operation mode (step S11).

Regarding a relationship between the touch detection threshold and the capacitance detection value in the stationary operation mode, this relationship is as described in Embodiment 1 (see Figure 4) and therefore explanation will be omitted.

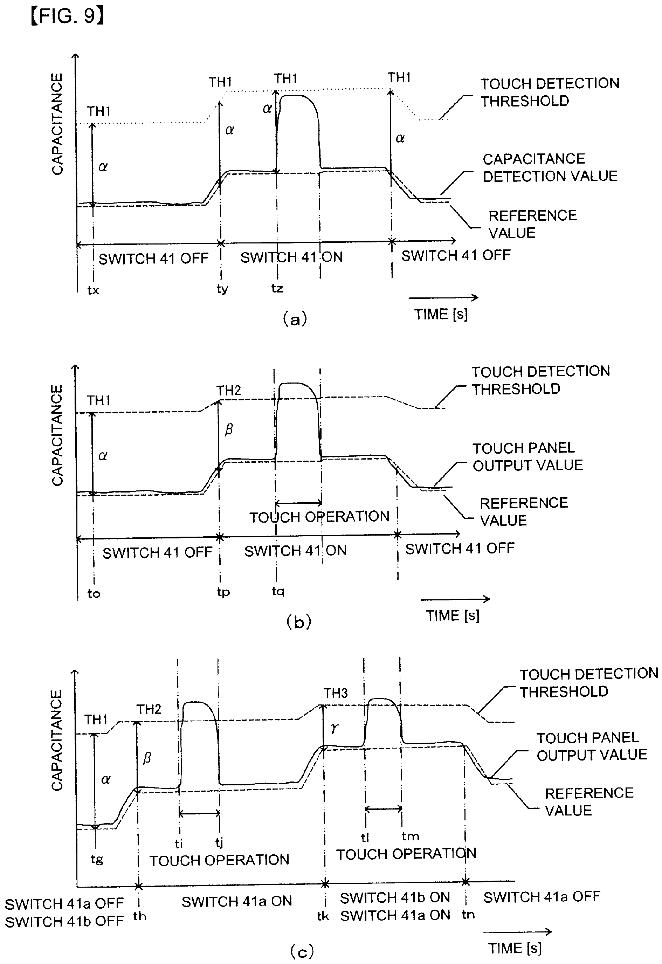

Next, a touch detection threshold and a capacitance detection value in the one-hand operation mode will be explained using Figure 9.

Figure 9(a) is a diagram showing a state where the touch detection threshold is constant (TH1 in this case), Figure 9(b) is a diagram showing a case where the touch detection threshold is changed to one of two values of the touch detection threshold TH1 and a touch detection threshold TH 2. Figure 9(c) is a diagram showing a case where the touch detection threshold is changed to one of the touch detection threshold TH1, the touch detection threshold TH2 and a touch detection threshold T3.

The PND 40 according to the present embodiment sets the touch detection threshold to one of TH1, TH2 and TH3 in a switched manner for each operation mode. Figure 9(a) shows that, when the operator holds the PND 40 by one hand in a case where the touch detection threshold is not changed and is fixed to TH1, the operation becomes invalid even if the operator touches the touch panel 18, since the touch detection value does not exceed the touch detection threshold (TH1). This is the same as described in Embodiment 1 (Figure 5(a)) and therefore explanation will be omitted.

It should be noted that, when the operator holds the PND 40, a trouble that an operation becomes invalid because the touch detection value does not exceed the touch detection threshold (TH1), occurs not only in a case where the operator holds the PND by one hand but also in a case where the operator holds the PND by both hands. Further, even if the touch detection thresholds are set to a constant value (e.g. TH2) in both of the case of holding and using the PND by one hand and the case of holding and using the PND by both hands, the same trouble may occur.

Therefore, by switching touch detection thresholds, the PND 40 according to the present embodiment performs control while increasing the detection accuracy. The details are as follows. First, a case will be explained using Figure 9(b) where the touch detection value is changed from TH1 to TH2.

As shown in Figure 9(b), at time "to" when the switch 41 is turned off, a value obtained by adding α to the reference value is set as the touch detection threshold TH1.

At time "tp" when the operator holds the PND by one hand and tries to operate the PND by the finger 71 of the holding hand, the switch 41 of the PND 10 is pressed by the operator in the state shown in Figure 7(b) and therefore the switch 41 is turned on. Accordingly, the capacitance detection value increases by the capacitance of the finger 71 of the holding hand and the control unit 20 changes the reference value according to the change of the capacitance detection value.

When the switch 41 is turned on, the control unit 20 sets a value obtained by adding β, which is lower than α, to the reference value, as the touch detection value TH2.

At time "tq" when the operator touches the touch panel 18 by the finger 71 of the hand holding the PND 40, the capacitance detection value exceeds the touch detection threshold TH2 and therefore the operator's touch operation is detected.

Next, a case will be explained using Figure 9(c) where the touch detection value is changed from TH2 to TH3.

As shown in Figure 9(c), at time "tg" when both of the switches 41a and 41b are turned off, a value obtained by adding α to the reference value is set as the touch detection threshold TH1.

After time "tg" when the operator approaches an operator's hand to the PND 40, a touch panel output value gradually increases. After that, when the operator holds the PND by one hand and tries to operate the PND by the finger 71 of the holding hand, the capacitance detection value increases by the capacitance of the finger 71a of the holding hand.

Accordingly, the control unit 20 changes the reference value according to the change of the capacitance detection value. After that, at time "th" the switch 41a (or 41b) of the PND 40 is pressed by the operator and therefore the switch 41a (or 41b) is turned on.

At this time, as described above, the control unit 20 continues the processing flow shown in Figure 8 and therefore sets a value obtained by adding β, which is lower than α, to the reference value, as the touch detection value TH2.

After that, at time "ti" when the operator touches the touch panel 18 by the finger 71 of the hand holding the PND 40, the capacitance detection value exceeds the touch detection threshold TH2 and therefore the operator's touch operation is detected.

Figure 9(c) supplementary shows waveforms in a case where the operator performs a touch operation in a state before changing the touch detection value to TH3 after changing the touch detection value from TH1 to TH2. However, in this state, the operator needs not necessarily perform the touch operation.

After time "tj" at which the touch operation is finished (or at time "th" if the touch operation is not performed at time "ti"), when the operator holds the PND 40 by one hand and approaches the other hand to the PND 40, the touch panel output value further increases in a gradual manner.

After that, when the operator holds the PND by both hands and tries to operate the PND by the finger 71a or 71b of the holding hands, the capacitance detection value increases by the capacitance of the finger 71a of the holding hands.

Accordingly, the control unit 20 changes the reference value according to the change of the capacitance detection value. After that, at time "tk" the switch 41b (or switch 41a) of the PND 10 is pressed by the operator and therefore the switch 41b (or switch 41a) is turned on. At this time, as described above, the control unit 20 continues the processing flow shown in Figure 8 and therefore sets a value obtained by adding γ, which is lower than β, to the reference value, as the touch detection value TH3.

After that, at time "tl" when the operator touches the touch panel 18 by the finger 71a or 71b of the hands holding the PND 40, the capacitance detection value exceeds the touch detection threshold TH3 and therefore the operator's touch operation is detected.

In a case where a capacitive touch panel is used, normally, it is necessary to increase a difference between the reference value and the touch detection threshold in some degree such that a false operation is not caused when, for example, a human gets across the vicinity of the touch panel.

According to the present invention, when the switch 41 is turned on, although the capacitance detection value increases according to an influence of the finger 71 of the hand holding the PND, this is caused by the operator's intended operation. Therefore, by switching touch detection thresholds between modes and setting a small difference between the reference value and the touch detection threshold, the capacitance detection value reliably exceeds the touch detection threshold, and therefore it is possible to perform a touch operation as intended by the operator.

As described above, the present embodiment is provided with a capacitive touch panel, a switch for detecting a one-hand operation, a storage unit to store a touch detection threshold and a control unit to control the touch detection threshold, and, by changing the touch detection threshold according to an output of the switch that can detect the one-hand operation, the operator can operate the touch panel more reliably by the finger 71 of the hand holding a PND including a display device having the touch panel.

It should be noted that, although it is preferable to change the aspect of an image or video displayed on the PND 40 between the case of using the PND 40 vertically and the case of using the PND 40 horizontally, in addition to the content of the present embodiment, it may be possible to perform control of changing the aspect of an image or video between the case of turning on only one of the switches and the case of turning on both switches.

Especially, a display device having a conventional capacitive touch panel provides different sensor signal outputs in the vicinity of the touch panel between the case of holding the device by one hand and the case of holding the device by both hands, and therefore corresponding touch operations cannot be distinguished. However, by providing two switches 41a and 41b in the outer margin of the display device, it is possible to reliably determine whether the operator holds the display device by one hand, and, by changing the touch detection threshold according to this determination result, it is possible to reliably distinguish between the case of holding the device by one hand and the case of holding the device by both hands.

By this means, even if the same display device is used in the vertical or horizontal direction seen from the front of the operator, it is possible to reliably prevent a false operation.

Also, in a case where the display device has a large size, a person of muscle holds and operates the device by one hand while a powerless person holds and operates the device by both hands, that is, it is possible to use the device according to user preferences.

### (Embodiment 3)

Next, Embodiment 3 of the present invention will be explained. In the related art, in the case of taking into account that a small display device is held by one hand while performing an input operation of a touch panel, it is not possible to arrange an operation icon to execute a function of the display device in a position near a finger or the hand holding the display device. However, a display device according to the present embodiment has a touch panel such that, even in a touch operation after an operator's finger stays near the touch panel before touching the touch panel, it is possible to increase the detection accuracy in a simple configuration and improve the operability especially when holding and operating a small or portable display device by one hand.

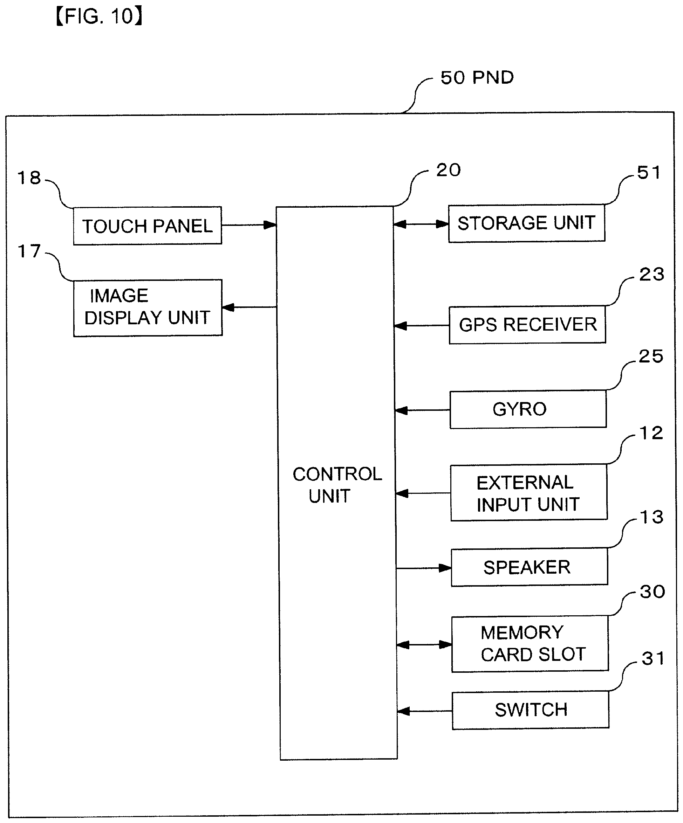

Figure 10 is a block diagram of a display device having a touch panel according to Embodiment 3 of the present invention. A PND 50 is provided with a storage unit 51, the external input unit 12, the speaker 13, the image display unit 17, the touch panel 18, the control unit 20, the GPS receiver 23, the gyro 25, the memory card slot 30 and the switch 31.

The storage unit 51 is a data storage device such as an HDD, an SD card and a flash memory mounted on a printed circuit board in a PND in-vehicle device, and may adopt one kind or multiple kinds of them.

The storage unit 51 stores data related to a shape of an icon displayed in the image display unit 17 or a basic program required to control operations of the PND, and, furthermore, stores various programs and databases such as a program to control the image display unit or an image display, application software used to perform a navigation function or a playback function of a moving image and music stored in a memory card inserted in the memory card slot 30, and a database related to a map for navigation or a telephone number database.

Also, similar to a general storage device, the storage unit 51 is provided with an area for expanding various kinds of programs and data and an area for expanding an image.

In addition, the storage unit 51 stores icon layouts corresponding to a plurality of operation modes which will be described later in detail.

Here, the icon layout denotes an arrangement pattern in which icons for an input operation by an operator are arranged to execute each function of the PND 50 such as a periphery search and a point registration.

Regarding the PND 50 configured as above, operations will be explained using Figure 10 to Figure 12. The PND 50 according to Embodiment 3 is configured to separately recognize a state where the user directly holds the PND 50 in a palm side of a hand and uses the PND 50 (i.e. one-hand operation mode) and a state where the user fixes (or simply places) the PND 10 to a specific position and uses the PND (i.e. stationary operation mode), according to whether the switch 31 is pressed. It should be noted that usage patterns of the PND 50 are the same as explained in Embodiment 1 (see Figure 2) and therefore specific explanation will be omitted.

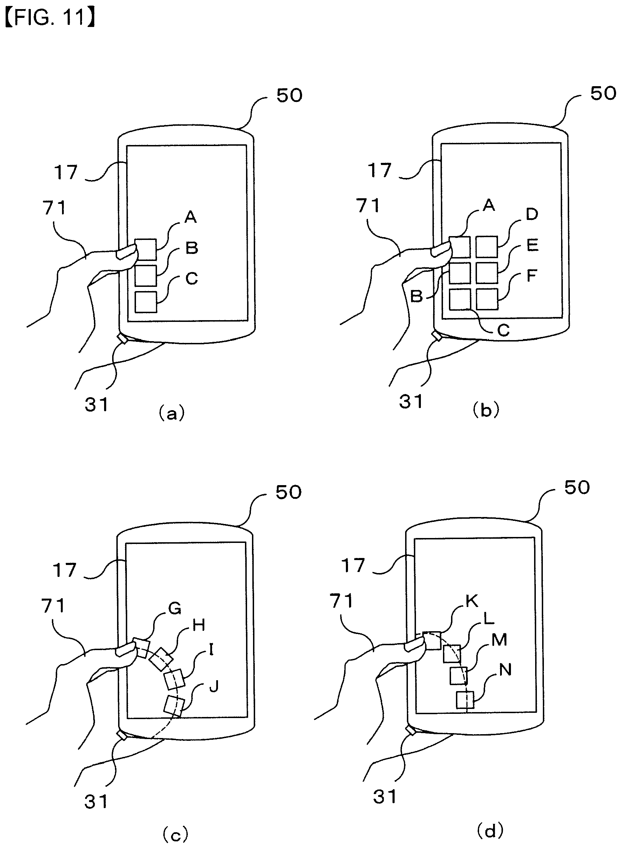

Next, a display layout (icon layout) example of operation icons (i.e. icons to execute each function of the PND 50) in a case where the PND 50 is operated in the one-hand operation mode, will be explained using Figure 11.

In the present embodiment, display layouts of operation icons to improve the operability especially at the time of the one-hand operation mode are common in that operation icons are arranged in positions near the switch 31 on the image display unit (i.e. within a range in which the operator's finger 71 is touchable) such that the operator handily operates (e.g. touch operation or input operation) the PND 50 by the finger 71 (especially, indicating a thumb in the present embodiment) of the hand holding the PND 50 while maintaining a state where the operator holds the PND 50 by one hand and the switch 31 is turned on.

Figure 11 is a diagram showing a display layout (or one-hand operation layout) example of operation icons at the time of the one-hand operation mode of the PND 50 according to the present embodiment.

As Example 1, a display layout shown in Figure 11(a) denotes a layout in which operation icons A to C are linearly arranged in tandem in the lower left of the image display unit 17 of the PND 50 in a state where the operator holds the PND 50 vertically and the switch 31 is turned on by a palm of the operator's left hand.

By means of this layout, it is possible to keep a display area to display other display images than the operation icons A to C, and, since the operation icons A to C are linearly arranged with respect to the linear image display unit 17, the design is good.

As Example 2, a display layout shown in Figure 11(b) denotes a layout in which operation icons D to F are arranged in parallel in addition to the layout in which the operation icons A to C are linearly arranged in tandem in the lower left of the image display unit 17 of the PND 50 (i.e. the display layout as Example 1), in a state where the operator holds the PND 50 vertically and the switch 31 is turned on by the palm of the operator's left hand.

By means of this layout, since those icons are linearly arranged with respect to the linear image display unit 17, it is possible to provide the same effect as in the layout of example 1 having a good design and increase the number of operation icons to be displayed, which is convenient for the users requesting use of many functions.

As Example 3, a display layout shown in Figure 11(c) denotes a layout in which operation icons G to J are arranged in an arc-like manner on the lower left side in the image display unit 17 of the PND 50, in a state where the operator holds the PND 50 vertically and the switch 31 is turned on by the palm of the operator's left hand. This arc (i.e. the ark shown by dash line in Figure 11(c)) is part of a circle (or true circle) around arbitrary one point, on which each operation icon is arranged on the arc. It is noted that the dash line shown in Figure 11(c) is added for the purpose of explanation and is not actually displayed in the image display unit 17.

By means of this layout, the operator's finger 71 moves smoothly so that the operability improves compared to the case of using the layout shown in Example 1.

That is, in the case of the layout shown in Example 1, the motion of the finger 71 is limited when moving the finger 71 for operation, and, taking into account that the finger 71 is naturally moved in a state where the switch 31 is turned on, it is generally considered that the trajectory described by this fingertip becomes arc-like, so that it is possible to move the operator's finger 71 smoothly at the time of operation.

Also, by means of the layout shown in Example 3, it is possible to regularly arrange operation icons to be displayed and improves the design.

However, the above arc is not limited to an arc as part of a true circle, and, taking into account further improvement of the operability by the operator, it may be possible to arrange operation icons K to N on an arc that is part of an ellipse as shown in Figure 11(d) as Example 4.

Also, in the case of taking into account that a plurality of operators use the PND, regarding the operability subject to a finger's length that varies between the operators, it is possible to compensate the operability by setting an operation icon size.

It should be noted that, in the cases of Examples 1 to 4, the number of operation icons is not limited to the above number and may be one or two. Furthermore, within a range in which the operator's finger is touchable, it is possible to arrange operation icons corresponding to the number equal to or greater than the above exemplified numbers.

Also, it is not necessary to arrange the operation icons only in the above-noted positions and some icon may be displayed in other areas than the above-noted area.

Since operation icons arranged near the switch 31 are determined by a manufacturer of the PND 50 or selected by the user of the PND 50 with due consideration of features of the one-hand operation mode, an operation icon of less use frequency is arranged in a position apart from the operator's finger 71.

That is, it is considered that, in most of cases where the PND 50 is used in the one-hand operation mode, the PND 50 is used while walking (including the case of temporarily stopping to use the PND 50 in downtown), and therefore operation icons that are frequently used while walking are arranged on the side of the switch 31. As such operation icons arranged near the switch 31, the following examples are given.

First, an operation icon to search surrounding facilities of the operator is given. With this operation icon, it is possible to search surrounding facilities of the operator who operates the PND in the one-hand mode, and therefore the operation icon is useful to search surrounding stations, restaurants or the like. When this operation icon is operated, the control unit 20 calls icons related to stations, restaurants or the like in the storage unit 51 and displays these icons on the image display unit 17. By touching the touch panel 18, the operator can search an intended facility.

Especially, among operation icons to search surrounding facilities, a neighboring station icon or neighboring toilet icon to search a station or toilet of high use frequency at one touch of the button may be arranged near the switch 31.

Also, an operation icon for point registration is given. This operation icon is provided to register a curious place while walking, and, when this operation icon is operated, information (e.g. latitude and longitude) showing the place is registered (or stored) in the PND 50.

Also, an operation icon to register a note is given. This operation icon is provided to record what is curious while walking, and, when this operation icon is operated, the location is registered and the operator can record a note.

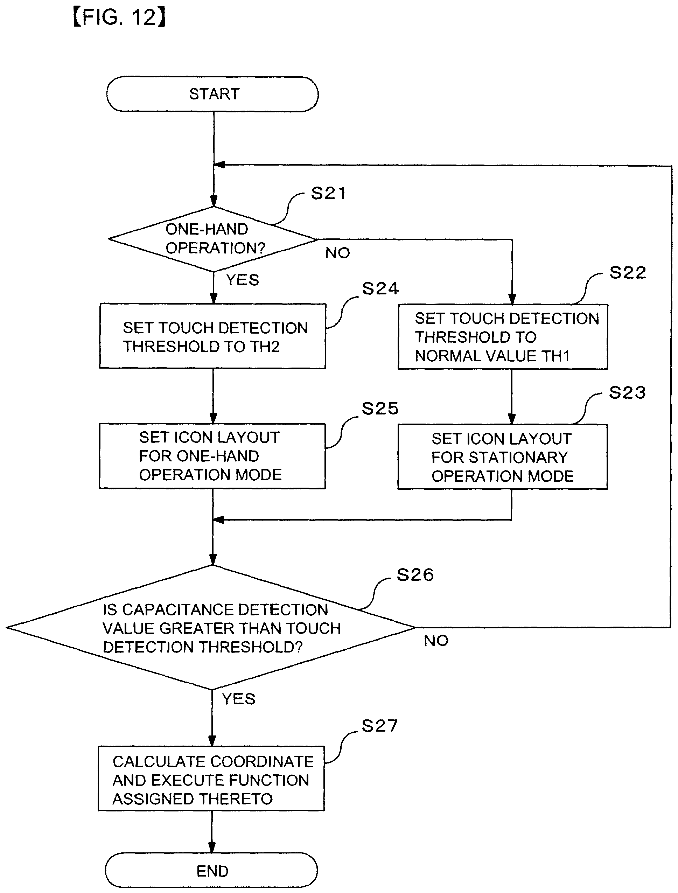

Next, operations of the PND 50 will be explained using Figure 12. In the PND 50 according to the present embodiment, although a general capacitive touch panel is used as the touch panel 18, generally, a capacitive touch panel detects a capacitance change caused by a finger approaching the touch panel and recognizes that the operator touches the touch panel when the capacitance change is equal to or greater than a touch detection threshold.

Here, the touch detection threshold denotes a value whereby the control unit recognizes that the operator operates the touch panel when a capacitance caused by a finger approaching the touch panel exceeds this touch detection threshold. In the present embodiment, by changing this touch detection threshold between the one-hand operation mode and the stationary operation mode, it is possible to prevent a false operation caused by covering the touch panel 18 with an operator's finger at the time of the one-hand operation mode.

Also, in the following explanation, it is assumed that a touch detection threshold used for control in the stationary operation mode is TH1 and a touch detection threshold used for control in the one-hand operation mode is TH2. First, operations will be explained in a case where the PND 50 is attached to the stand 81 (i.e. stationary operation mode).

The operations start from a state where nothing touches the touch panel 18 (corresponding to a start state in Figure 12). After processing starts, the control unit 20 determines an operation mode (step S21), that is, in a case where the PND 50 is attached to the stand 81, the control unit 20 detects that the switch 31 is turned off since the switch 31 is not pressed, and the control unit 20 determines that the PND 50 is not in the one-hand operation mode but in the stationary operation mode (step S21: NO).

As a result of the determination, since the PND 50 is not in the one-hand operation mode but in the stationary operation mode, the control unit 20 sets a touch detection threshold to TH1 (step S22).

When setting the touch detection threshold to TH1 in step S2, the control unit 20 calls an icon layout corresponding to the stationary operation mode from the storage unit 51 and sets the icon layout to be displayed on the image display unit 17 (step S23).

Here, the icon layout corresponding to the stationary operation mode may denote a general icon layout and specific explanation will be omitted.

After the processing in step S23, when the operator touches the touch panel 18 and a capacitance detection value (i.e. capacitance variation) exceeds the touch detection threshold (or TH1 in this case), the control unit 20 determines this excess (step 26: YES), calculates a coordinate at which the operator touches the touch panel 18, and reads a function assigned to the coordinate from the storage unit 51 to execute the function (step S27).

When the capacitance detection value does not exceed the touch detection threshold (step S26: NO), the flow returns to determination processing as to whether the operation mode is the one-hand operation mode (step S21).

Next, operations will be explained in a case where the PND 50 is held by one hand and operated by the finger 71 of the holding hand (i.e. one-hand operation mode).

The operations start from a state where nothing touches the touch panel 18 (corresponding to a start state in Figure 12). When the PND 50 is held by one hand of the operator, the switch 31 is pressed and turned on and the control unit 20 detects a state of the switch 31 and determines that the PND 10 is in the one-hand operation mode (step S21: YES).

When the control unit 20 determines that the operation mode is the one-hand operation mode, the control unit 20 sets the touch detection threshold to TH2 (step S24).

When setting the touch detection threshold to TH2 in step S24, the control unit 20 calls an icon layout corresponding to the one-hand operation mode from the storage unit 51 and sets the icon layout to be displayed on the image display unit 17 (step S25).

As described above, the icon layout corresponding to the one-hand operation mode denotes an icon layout in which main operation icons are arranged near the switch 31, and specific explanation will be omitted.

When the operator touches the touch panel 18 by the finger 71 of the hand holding the PND 50 and a capacitance detection value exceeds the touch panel detection threshold (or TH2 in this case), the control unit 20 determines this (step S26: YES), calculates a coordinate at which the operator touches the touch panel 18, reads a function assigned to the coordinate from the storage unit 51 and executes the function (step S27).

After the control unit 20 determines the one-hand operation mode as the operation mode and sets the touch detection threshold to TH2, when the capacitance detection value does not exceed the touch detection threshold (or TH2 in this case) (step S26: NO), whether the operation mode is the one-hand operation mode is determined (step S21).

It should be noted that an installation location of the switch 31 in the present embodiment may be the lower right side of the PND, and, in a case where the switch 31 is installed in the lower right, it is possible to hold the PND 50 by the right hand and operate the touch panel by a finger of the holding right hand.

Further, a plurality of the switches 31 may be provided and, in a case where the switches 31 are provided in the right and left parts, it is possible to operate the PND 50 by the right hand as well as the left hand as the operator likes.

Also, since it is generally expected to operate a portable device such as the PND 50 by one hand, although a one-hand operation has been exemplified and explained in the present embodiment, the PND 50 is not necessarily operated only by one hand, and it may be possible to press the switch 31 by one hand and perform an operation by the other hand.

### (Embodiment 4)

Next, Embodiment 4 of the present invention will be explained. In the related art, when a display device having a touch panel is applied to an in-vehicle device, since operation devices with respect to other in-vehicle devices than this display device concentrate around the driving seat or dashboard, the user's hand or arm often crosses near the display device having the touch panel, and therefore it is concerned that a capacitance near the touch panel changes significantly and many false operations of the display device are caused. However, a display device according to the present embodiment has a touch panel such that, even in a touch operation after an operator's finger stays near the touch panel before touching the touch panel, it is possible to increase the detection accuracy in a simple configuration and reduce a false operation especially when the display device is applied to an in-vehicle device.

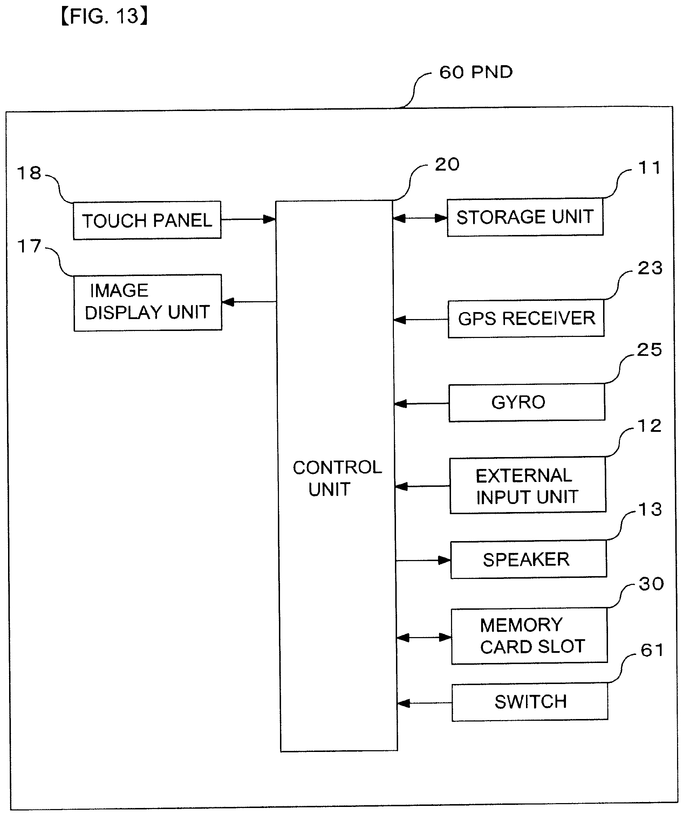

Figure 13 is a block diagram of a display device having a touch panel according to Embodiment 3 of the present invention. A PND 60 is provided with the storage unit 11, the external input unit 12, the speaker 13, the image display unit 17, the touch panel 18, the control unit 20, the GPS receiver 23, the gyro 25, the memory card slot 30 and a switch 61.

As described later, the switch 61 is turned on when the PND 60 is attached to the stand 82 to fix the PND 60 in a specific position in a case where the PND 60 is used as a so-called in-vehicle device (e.g. in a case where the PND 60 is used in a car).

The switch 61 may be configured as, for example, a mechanic type of generating different signals according to whether the switch 61 is held down (or pressed), a type using a transmissive photo interrupter for generating different signals according to whether light is interrupted, or a type using a reflective photo sensor to detect that the PND 60 is attached to the stand 82 by reflecting light to the stand 82.

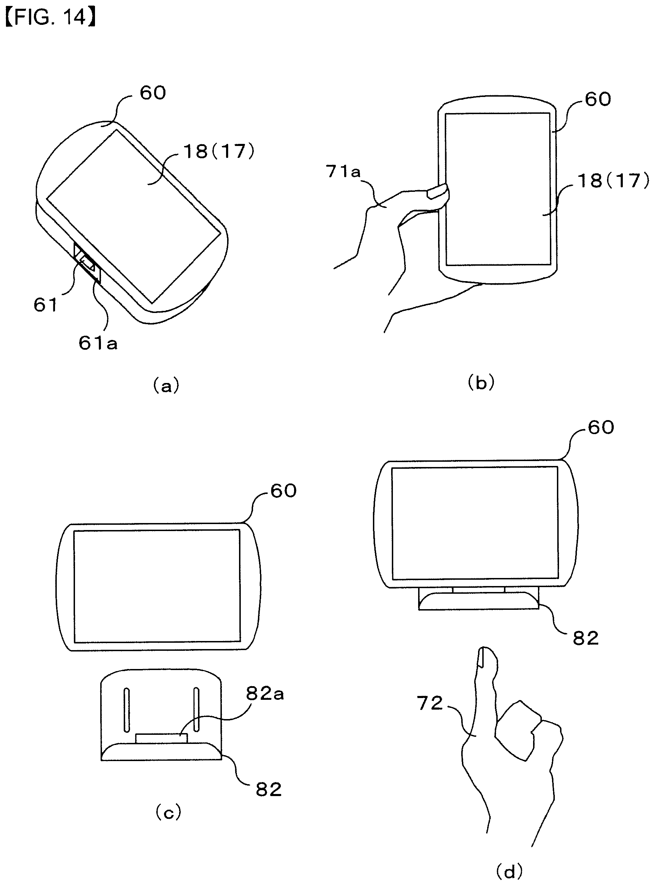

Regarding the PND 60 configured as above, operations will be explained using Figure 14 to Figure 16.

Figure 14 is a simple configuration diagram for explaining usage patterns of the PND 60 according to Embodiment 4 of the present invention.

It is assumed that the PND 60 according to the present embodiment serves dual purposes of a navigation device for pedestrians and an in-vehicle navigation device.

That is, both cases are considered where the PND 60 is used by a user (or operator) while walking and where the PND 60 is taken to a vehicle, fixed to a predetermined place in the vehicle and used while the vehicle is moving.

Figure 14(b) is a diagram showing an example case where the PND is used by the user (or operator) while walking. As shown in Figure 14(b), the PND 60 is small to the extent that it is possible to hold and operate the PND 60 by one hand.

Figure 14(c) and Figure 14(d) are diagrams showing an example case where the PND is used as an in-vehicle PND, and Figure 14(c) shows a state before the PND 60 is attached to the stand 82 to fix the PND 60 in an intended position in the vehicle, and Figure 14(d) shows a state where the PND 10 is moved down from the state shown in Figure 14(c) and fixed to the stand 82.

In particular, for example, when the PND 60 is used by a user while walking, the user directly holds the PND 60 in a palm side of a hand and operates the PND 60.

In this case, since the touch panel 18 of the PND 60 is a capacitive touch panel, an operator's finger may cover the touch panel 18 when operating the PND 60, and, at that time, the capacitance value detected by the PND 60 slightly changes.

Meanwhile, when the user takes the PND 60 to a vehicle, normally, after the PND 60 is fixed to a dashboard or the like in the vehicle, the user operates or views the PND 60.

In this case (i.e. in a case where the PND is mounted on a vehicle and used), although the PND 60 is operated limitedly in a specific position such as a dashboard, operation devices to operate other devices provided in advance such as an air conditioner, a blinker and a head light are installed in the vehicle, where most of these operation devices are arranged in operable positions from the driving seat.

Similarly, since the PND 60 is arranged in an operable position from the driving seat in many cases, even in other cases than a case where the operator intentionally operates the PND 60, a state often occurs where an operator's arm or finger may cross or cover the vicinity of the PND 60 (specifically, the touch panel 18).

Taking into account these two main categories, the PND 60 according to the present embodiment is configured to separately recognize a state where the user directly holds the PND 60 in a palm side of a hand and uses the PND 60 (hereinafter an operation mode of the PND 60 in this state is referred to as "one-hand operation mode") and a state where the user fixes (or simply places) the PND 60 to a specific position and uses the PND 60 (hereinafter an operation mode of the PND 60 in this state is referred to as "stationary operation mode").

The switch 61 provided in the PND 60 is provided to identify the above two modes and switches signals between a state where the switch 61 is pressed (i.e. "ON" state) and a state where the switch 61 is not pressed (i.e. "OFF" state), and the control unit 20 recognizes this changeover, determines whether the current mode is the one-hand operation mode or the stationary operation mode, and performs control processing based on the determination result.

The switch 61 is provided such that the switch 61 is switched to the "ON" state only when the PND 60 is attached to the stand 82 fixed in the vehicle.

In the present embodiment, as shown in Figure 14(a), a concavity portion 61a hollowed to the main body side of the PND 60 is provided in an outer margin of the PND 60 in a state where the PND 60 is viewed from the front (i.e. anterior view), and the switch 61 is provided in the center part of the concavity portion 61a.

Here, the outer margin denotes an external margin of the device (i.e. PND 60) outside the display unit 17, including an outer part in the side or rear surface of the device.

Thus, by providing the switch 61, as shown in Figure 14(b), it is possible to prevent the switch 61 from being accidentally pressed in a case where the operator holds the PND in an operator's hand and uses the PND.

Also, the stand 82 is provided with a convexity portion 82a fitting the concavity portion 61a in a state where the PND 60 is attached to the stand 82. That is, by inserting the convexity portion 82a of the stand 82 in the concavity portion 32a of the PND 60, the convexity portion 82a presses the switch 61.

Further, the concavity portion 61a and the convexity portion 82a are fitted so that it is possible to stabilize relative positions of the PND 60 and the stand 82.

In the present embodiment, it is set in advance that the control unit 20 recognizes the one-hand operation mode in a period during which the switch 61 is not pressed and the stationary operation mode in other periods (i.e. a period during which the switch 61 is pressed).

Thus, regarding the PND 60 according to the present embodiment whose operations have been roughly explained, the detailed operations will be explained below.

Figure 14(a) shows a configuration of the PND 60 alone according to Embodiment 4 and shows a state where the PND 60 has the image display unit 17 and the touch panel 18 is provided in front of the image display unit 17. Further, the figure shows that the switch 61 to detect the PND 60 fixed into a vehicle is provided on the PND 60.

Figure 14(b) shows one example of the one-hand operation mode and is used for explaining that the PND 60 is held by one hand and operated by a finger of the holding hand. Further, Figure 14(b) shows that the operator holds the PND 60 by one hand so that it is possible to operate the touch panel 18 by the finger 71 of the holding hand.

Here, in the present embodiment, although the "one-hand operation mode" is referred to for ease of explanation, the operator may operate the PND 60 by both hands at the time of this one-hand operation mode.

Figure 14(c) and Figure 14(d) show one example of the stationary operation mode and are diagrams for explaining a case where the PND 60 is installed and used in a vehicle. Further, these figures show that, in a case where the PND 60 is attached to a stand 82, the operator can touch and operate the touch panel 18 of the PND 60 attached to the stand 82 by the finger 72.

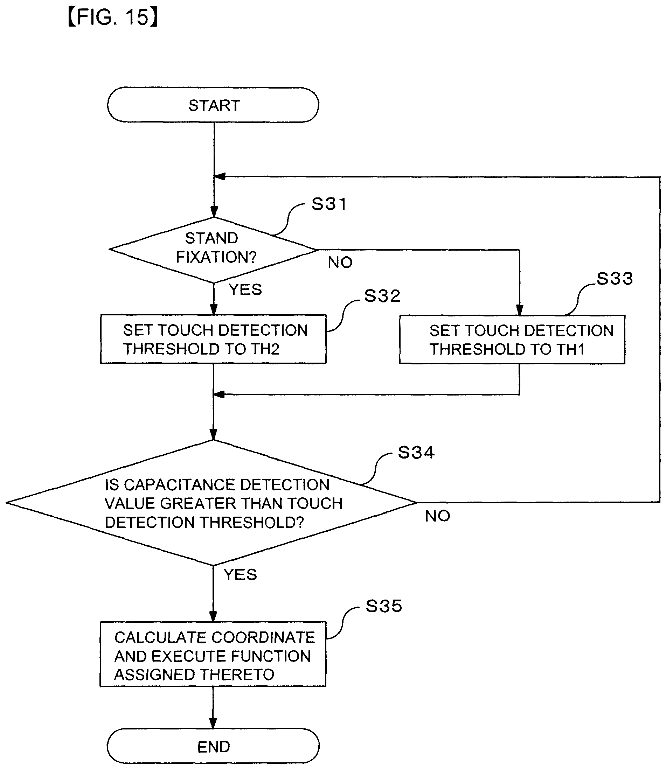

Next, operations of the PND 60 will be explained using Figure 15. In the PND 60 according to the present embodiment, although a general capacitive touch panel is used as the touch panel 18, generally, a capacitive touch panel detects a capacitance change caused by a finger approaching the touch panel and recognizes that the operator touches the touch panel when the capacitance change is equal to or greater than a touch detection threshold.

Here, the touch detection threshold denotes a value whereby the control unit recognizes that the operator operates the touch panel when a capacitance caused by a finger approaching the touch panel exceeds this touch detection threshold. In the present embodiment, by changing this touch detection threshold between the one-hand operation mode and the stationary operation mode, it is possible to prevent a false operation caused by covering the touch panel 18 with an operator's finger at the time of the one-hand operation mode.

Also, in the following explanation, it is assumed that a touch detection threshold used for control in the one-hand operation mode is TH1 and a touch detection threshold used for control in the stationary operation mode is TH2.

First, operations will be explained in a case where the PND 60 is not attached to the stand 82 (i.e. one-hand operation mode).

The operations start from a state where nothing touches the touch panel 18 (corresponding to a start state in Figure 15). After processing starts, the control unit 20 determines an operation mode (step S31). That is, in a case where the PND 60 is not attached to the stand 82, the control unit 20 detects that the switch 61 is turned off since the switch 61 is not pressed, and the control unit 20 determines that the PND 60 is not in the stationary operation mode but in the one-hand operation mode (step S31: NO).

As a result of the determination, since the PND 60 is not in the stationary operation mode but in the one-hand operation mode, the control unit 20 sets a touch detection threshold to TH1 (step S33).

When the operator touches the touch panel 18 and a capacitance detection value (i.e. capacitance variation) exceeds the touch detection threshold (or TH1 in this case), the control unit 20 determines this excess (step 34: YES), calculates a coordinate at which the operator touches the touch panel 18, and reads a function assigned to the coordinate from the storage unit 11 to execute the function (step S35).

When the capacitance detection value does not exceed the touch detection threshold (step S34: NO), the flow returns to determination processing as to whether the operation mode is the one-hand operation mode (step S31).

Next, operations will be explained in a case where the PND 60 is attached to the stand 82 (i.e. stationary operation mode).

The operations start from a state where nothing touches the touch panel 18 (corresponding to a start state in Figure 15). When the PND 60 is attached to the stand 82 by the operator, the switch 61 is pressed and turned on and the control unit 20 detects a state of the switch 61 and determines that the PND 60 is in the stationary operation mode (step S31: YES) .

When the control unit 20 determines that the operation mode is the stationary operation mode, the control unit 20 sets the touch detection threshold to TH2 (step S32).

In this state (i.e. a state where the PND 60 is attached to the stand 82), when the operator touches the touch panel 18 by the finger 72 and a capacitance detection value exceeds the touch panel detection threshold (or TH2 in this case), the control unit 20 determines this (step S34: YES), calculates a coordinate at which the operator touches the touch panel 18, reads a function assigned to the coordinate from the storage unit 11 and executes the function (step S35).

After the control unit 20 determines the stationary operation mode as the operation mode and sets the touch detection threshold to TH2, when the capacitance detection value does not exceed the touch detection threshold (or TH2 in this case) (step S34: NO), whether the operation mode is the one-hand operation mode is determined (step S31).

Regarding a relationship between the touch detection threshold and the capacitance detection value in the stationary operation mode, this relationship is as described in Embodiment 1 (see Figure 4) and therefore explanation will be omitted.

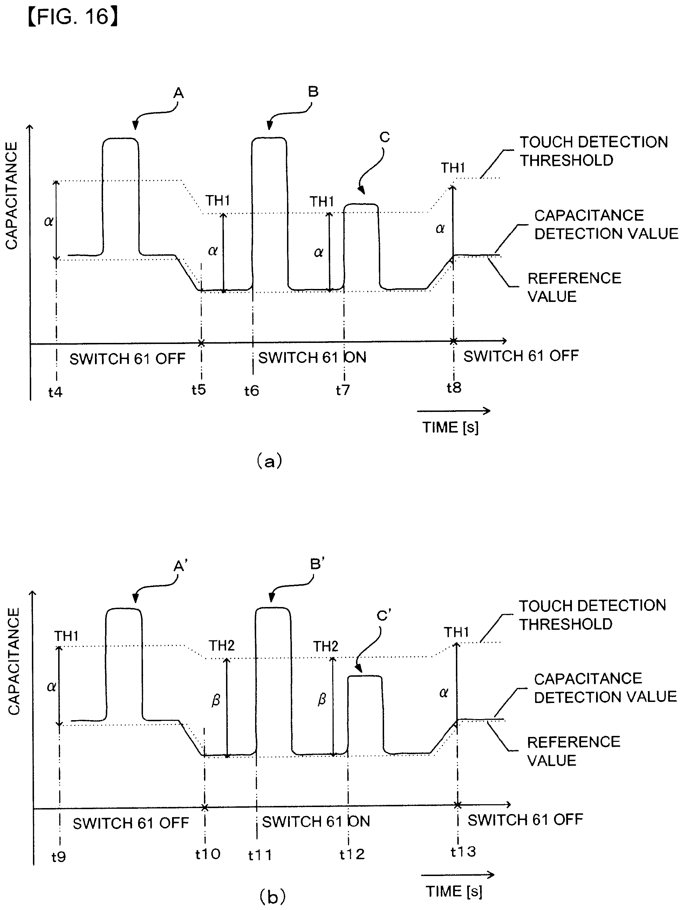

Next, a touch detection threshold and a capacitance detection value in the one-hand operation mode will be explained using Figure 16.

Figure 16(a) is a diagram showing a state where the touch detection threshold TH1 is constant, and Figure 16(b) is a diagram showing a case where the touch detection threshold is changed to one of two values of the touch detection threshold TH1 and the touch detection threshold TH2.

Although the PND 60 according to the present embodiment changes the touch detection threshold to one of the values TH1 and TH2 at the time of the one-hand operation mode, for ease of understanding, first, a harmful effect that can be caused in a case where the touch detection threshold is not changed but is fixed to TH1, will be explained using Figure 16(a).

Also, in a case where the operator performs a touch operation or where a finger or arm of a passenger in the vehicle crosses or temporarily approaches the vicinity of the touch panel 18, although the capacitance value changes rapidly, in the following explanation, this rapid capacitance value change will be referred to as "(capacitance) peak" for ease of explanation.

At time "t4" when the switch 61 is turned off, a value obtained by adding α to the reference value is set as the touch detection threshold TH1.

When a touch operation is performed by the operator in a period between time "t4" and subsequent time "t5", a rapid change in the capacitance value occurs. This touch detection value change is shown as peak A in Figure 16(a). When this peak A occurs, the capacitance exceeds the touch detection threshold TH1, and therefore the PND 60 recognizes that the operator performs a touch operation.

After that, at time "t5" when the operator attaches the PND 60 to the stand 82, the switch 61 is turned on, the finger 71 of the operator's holding hand is lifted and therefore the capacitance detection value decreases. The control unit 20 changes the reference value according to the capacitance detection value change. The control unit 20 similarly changes the touch detection threshold TH1 adding α to the reference value.

In this state, in a period till subsequent time "t8" when the operator touches the touch panel 18 of the PND 60 by the finger 72 of the hand and the capacitance detection value rapidly changes in a short period of time, the capacitance detection value exceeds the touch detection threshold and the PND 60 detects the operator's touch operation, so that the PND 60 accepts an operator's intended operation.

For example, in a state where the switch 61 is in the "ON" state, when the operator performs a touch operation at time "t6" peak B occurs. Then, since the capacitance changes to the same extent as peak A and largely exceeds the threshold TH1 at time "t6", the PND 60 recognizes the operator's touch operation.

However, even when the switch 61 is turned on and a finger or arm of a passenger in the vehicle crosses or temporarily approaches the vicinity of the touch panel 18 after time "t5" at which the capacitance detection value decreases, the capacitance value changes rapidly.

In this case (i.e. in a case where a finger or arm of a passenger in the vehicle crosses or temporarily approaches the vicinity of the touch panel 18), as shown in peak C in Figure 16(a), the capacitance detection value can exceed the touch detection threshold TH1, which results in executing a function set in a position corresponding to the coordinate at which this capacitance is detected.

That is, when the operator holds the PND 60 by one hand and uses the PND 60, an operator's finger stays near the touch panel 18 before touching the touch panel, and the capacitance detection value relatively increases by the capacitance of the finger 71 of the hand holding the PND 60 compared to the capacitance in the case of attaching the PND 60 to the stand 81 and using the PND 60. Therefore, in a case where a value (i.e. touch detection threshold TH1) adding α to the reference value in a simple manner is set as a touch detection threshold without taking into account the increment, even if the operator does not touch the touch panel 18, the touch detection value exceeds the touch detection threshold (or the touch detection threshold TH1 in this case) when a finger or arm of the operator temporarily approaches the touch panel 18, and therefore the operation becomes valid.

Therefore, by switching touch detection thresholds, the PND 60 according to the present embodiment performs control while increasing the detection accuracy. The details are as follows.

A case will be explained using Figure 16(b) where the touch detection threshold is switched from the TH1 to TH2. When the switch 61 is turned off, a value obtained by adding α to the reference value is set as the touch detection threshold TH1.

At time "t10" when the operator attaches the PND 10 to the stand 82, as shown in Figure 14(d), the switch 61 of the PND 60 is pressed by the stand 82. Then, the switch 61 is turned on, the capacitance detection value decreases by the capacitance of the finger 71 of the operator's hand lifted, and the control unit 20 changes the reference value according to the capacitance detection value change. When the switch 61 is turned on, the control unit 20 sets a value obtained by adding β, which is greater than α, to the reference value, as the touch detection value TH2.

At time "t11" when the touch panel 18 of the PND 60 attached to the stand 82 is touched by the finger 72 of the hand, the capacitance detection value of peak B' exceeds the touch detection threshold TH2, and therefore the operator's touch operation is detected.

By contrast with this, even if a finger or arm of a passenger in the vehicle temporarily approaches the touch panel 18 and a state of peak C' occurs at time "t12", since the touch detection value TH2 as a value obtained by adding β, which is greater than α, to the reference value, is set, peak C' is not detected (or the PND 60 does not recognize an intended operation) and a false operation does not occur.

As described above, the present embodiment is provided with a capacitive touch panel, a switch for detecting a stand attachment, a storage unit to store a touch detection threshold and a control unit to control the touch detection threshold, and, by changing the touch detection threshold according to an output of the switch that can detect the stand attachment, it is possible to reduce a false operation even in a case where a PND including a display device having the touch panel is mounted on a vehicle and tried out by the operator.

Although preferred embodiments of the present invention currently considered have been described above, it is interpreted that it is possible to apply various variations to the present embodiments, without departing from the scope of claims attached herein.

### [Industrial Applicability]

A display device having a touch panel according to the present invention relates to a display device having a touch panel that performs a predetermined input by operator's touch operation in front of an image display unit that displays predetermined content, and is useful as a display device having a touch panel applied to mobile devices such as a PND and portable multimedia player that are often operated while walking.

### [Reference Signs List]

- 10, 40, 50, 60: PND
- 11, 51: storage unit
- 12: external input unit
- 13: speaker
- 17: image display unit
- 18: touch panel
- 20: control unit
- 23: GPS
- 25: gyro
- 30: memory card slot
- 31, 41, 61: switch
- 71: holding hand's finger
- 72: finger
- 81, 82: stand

## Claims

1. A display device having a capacitive touch panel (18) in front of an image display unit (17), the touch panel (18) detecting a capacitance change, the display device comprising:
a control unit (20) that sets a threshold to be compared to a variation of a capacitance detected by the touch panel (18) to determine whether the touch panel (18) is operated; and
a switch (31, 41, 61) that causes the control unit (20) to detect that the display device is held by an operator,
wherein the control unit (20) sets the threshold to a different value according to a detection result using the switch (31, 41, 61), and
wherein the control unit (20) sets a threshold for a case where it is detected by the switch (31, 41, 61) that the operator holds the display device to a value lower than a threshold for a case where it is not detected that the operator holds the display device.

2. The display device according to claim 1, wherein the switch (31, 41, 61) is provided in a margin of the display device and a lower left side of the image display unit (17) in a front view.

3. The display device according to claim 1, wherein the switch (31, 41, 61) is provided in a margin of the display device and a lower right side of the image display unit (17) in a front view.

4. The display device according to claim 1, wherein the switch (31, 41, 61) is provided in a margin of the display device and lower left and right of the image display unit (17) in a front view.

5. The display device according to any one of claims 1 to 4, wherein:
the switch comprises a first switch (41a) and a second switch (41b);
the control unit (20) sets the threshold to a first threshold when it is detected that the first switch (41a) and the second switch (41b) are turned off, sets the threshold to a second threshold when it is detected that only the first switch (41a) is turned on, and sets the threshold to a third threshold when it is detected that both of the first switch (41a) and the second switch (41b) are turned on; and
the third threshold is a value lower than the second threshold and the second threshold is a value lower than the first threshold.

6. The display device according to claim 5, wherein the first switch (41a) is provided in a margin of the display device and one of a lower right side and lower left side of the image display unit (17) in a front view, and the second switch (41b) is provided in the other side of the image display unit (17).

7. The display device according to any one of claims 1 to 4, further comprising a storage unit (11, 51) that stores several kinds of icon layouts,
wherein the control unit (20) sets the threshold to a different value according to the detection result using the switch (31, 41, 61) and displays the icon layout corresponding to the detection result using the switch (31, 41, 61) on the image display unit (17).

8. The display device according to claim 7, wherein the control unit (20) displays a one-hand operation layout on the image display unit (17) when it is detected that the operator holds the display device, the one-hand operation layout being an icon layout in which operation icons are arranged near the switch (31, 41, 61).

9. The display device according to claim 8, wherein the operation icons are arranged in line in the one-hand operation layout.

10. The display device according to claim 8, wherein operation icons are arranged in a plurality of lines in the one-hand operation layout.

11. The display device according to claim 8, wherein the operation icons are arranged in an arc-like manner in the one-hand operation layout.

12. A display device having a capacitive touch panel (18) that detects a capacitance change, in front of an image display unit (17), the display device comprising:
a control unit (20) that sets a threshold to be compared to a variation of a capacitance detected by the touch panel (18) to determine whether the touch panel (18) is operated; and
a switch (31, 41, 61) that causes the control unit (20) to detect that the display device is attached to a stand (81, 82),
wherein the control unit (20) sets the threshold to a different value according to a detection result using the switch (31, 41, 61), and
wherein the control unit (20) sets a threshold for a case where it is detected by the switch (31, 41, 61) that the display device is attached to the stand (81, 82) to a value greater than a threshold for a case where it is not detected that the display device is attached to the stand (81, 82).

## Patentansprüche

1. Anzeigevorrichtung mit einem kapazitiven Berührungsfeld (18) vor einer Bildanzeigeeinheit (17), wobei das Berührungsfeld (18) eine Kapazitätsänderung ermittelt, wobei die Anzeigevorrichtung umfasst:
eine Steuereinheit (20), die einen Schwellenwert festlegt, der mit einer von dem Berührungsfeld (18) ermittelten Kapazitätsänderung verglichen wird, um zu bestimmen, ob das Berührungsfeld (18) betätigt wird; und
einen Schalter (31, 41, 61), der die Steuereinheit (20) zum Ermitteln veranlasst, dass die Anzeigevorrichtung von einer Bedienperson gehalten wird,
wobei die Steuereinheit (20) den Schwellenwert entsprechend einem Ermittlungsergebnis unter Verwendung des Schalters (31, 41, 61) auf einen anderen Wert setzt, und
wobei die Steuereinheit (20) einen Schwellenwert für einen Fall, in dem durch den Schalter (31, 41, 61) ermittelt wird, dass die Bedienperson die Anzeigevorrichtung hält, auf einen Wert setzt, der niedriger ist als ein Schwellenwert für einen Fall, in dem nicht ermittelt wird, dass die Bedienperson die Anzeigevorrichtung hält.

2. Anzeigevorrichtung nach Anspruch 1, wobei der Schalter (31, 41, 61) in einem Rand der Anzeigevorrichtung und einer unteren linken Seite der Bildanzeigeeinheit (17) in einer Frontansicht vorgesehen ist.

3. Anzeigevorrichtung nach Anspruch 1, wobei der Schalter (31, 41, 61) in einem Rand der Anzeigevorrichtung und einer unteren rechten Seite der Bildanzeigeeinheit (17) in einer Frontansicht vorgesehen ist.

4. Anzeigevorrichtung nach Anspruch 1, wobei der Schalter (31, 41, 61) in einem Rand der Anzeigevorrichtung und einer unteren linken und rechten Seite der Bildanzeigeeinheit (17) in einer Frontansicht vorgesehen ist.

5. Anzeigeverfahren nach einem der Ansprüche 1 bis 4, wobei:
der Schalter einen ersten Schalter (41a) und einen zweiten Schalter (41b) umfasst;
die Steuereinheit (20) den Schwellenwert auf einen ersten Schwellenwert setzt, wenn ermittelt wird, dass der erste Schalter (41a) und der zweite Schalter (41b) ausgeschaltet sind, den Schwellenwert auf einen zweiten Schwellenwert setzt, wenn ermittelt wird, dass nur der erste Schalter (41a) eingeschaltet ist, und den Schwellenwert auf einen dritten Schwellenwert setzt, wenn ermittelt wird, dass sowohl der erste Schalter (41a) als auch der zweite Schalter (41b) eingeschaltet sind; und
der dritte Schwellenwert ein niedrigerer Wert als der zweite Schwellenwert ist und der zweite Schwellenwert ein niedrigerer Wert als der erste Schwellenwert ist.

6. Anzeigevorrichtung nach Anspruch 5, wobei der erste Schalter (41a) in einem Rand der Anzeigevorrichtung und einer aus einer unteren rechten Seite und einer unteren linken Seite der Bildanzeigeeinheit (17) in einer Frontansicht vorgesehen ist, und der zweite Schalter (41b) in der anderen Seite der Bildanzeigeeinheit (17) vorgesehen ist.

7. Anzeigevorrichtung nach einem der Ansprüche 1 bis 4, des Weiteren umfassend eine Speichereinheit (11, 51), die mehrere Arten von Symbol-Layouts speichert,
wobei die Steuereinheit (20) den Schwellenwert entsprechend dem Ermittlungsergebnis unter Verwendung des Schalters (31, 41, 61) auf einen anderen Wert einstellt und das dem Ermittlungsergebnis entsprechende Symbol-Layout unter Verwendung des Schalters (31, 41, 61) auf der Bildanzeigeeinheit (17) anzeigt.

8. Anzeigevorrichtung nach Anspruch 7, wobei die Steuereinheit (20) ein Einhand-Bedienungslayout auf der Bildanzeigeeinheit (17) anzeigt, wenn ermittelt wird, dass die Bedienperson die Anzeigevorrichtung hält, wobei das Einhand-Bedienungslayout ein Symbol-Layout ist, in dem Bediensymbole in der Nähe des Schalters (31, 41, 61) angeordnet sind.

9. Anzeigevorrichtung nach Anspruch 8, wobei die Bediensymbole im Einhand-Bedienungslayout in einer Reihe angeordnet sind.

10. Anzeigevorrichtung nach Anspruch 8, wobei die Bediensymbole im Einhand-Bedienungslayout in einer Vielzahl von Reihen angeordnet sind.

11. Anzeigevorrichtung nach Anspruch 8, wobei die Bediensymbole im Einhand-Bedienungslayout bogenförmig angeordnet sind.

12. Anzeigevorrichtung mit einem kapazitiven Berührungsfeld (18), das eine Kapazitätsänderung ermittelt, vor einer Bildanzeigeeinheit (17), wobei die Anzeigevorrichtung umfasst:
eine Steuereinheit (20), die einen Schwellenwert festlegt, der mit einer von dem Berührungsfeld (18) ermittelten Kapazitätsänderung verglichen wird, um zu bestimmen, ob das Berührungsfeld (18) betätigt wird; und
einen Schalter (31, 41, 61), der die Steuereinheit (20) zum Ermitteln veranlasst, dass die Anzeigevorrichtung an einem Ständer (81, 82) befestigt ist,
wobei die Steuereinheit (20) den Schwellenwert entsprechend einem Ermittlungsergebnis unter Verwendung des Schalters (31, 41, 61) auf einen anderen Wert setzt, und
wobei die Steuereinheit (20) einen Schwellenwert für einen Fall, in dem durch den Schalter (31, 41, 61) ermittelt wird, dass die Anzeigevorrichtung an dem Ständer (81, 82) befestigt ist, auf einen Wert setzt, der größer ist als ein Schwellenwert für einen Fall, in dem nicht ermittelt wird, dass die Anzeigevorrichtung an dem Ständer (81, 82) befestigt ist.

## Revendications

1. Dispositif d'affichage ayant un panneau tactile capacitif (18) devant une unité d'affichage d'image (17), le panneau tactile (18) détectant un changement de capacité, le dispositif d'affichage comprenant :
une unité de commande (20) qui définit un seuil à comparer à une variation d'une capacité détectée par le panneau tactile (18) pour déterminer si le panneau tactile (18) fonctionne ; et
un commutateur (31, 41, 61) qui amène l'unité de commande (20) à détecter que le dispositif d'affichage est tenu par un opérateur,
dans lequel l'unité de commande (20) règle le seuil à une valeur différente en fonction d'un résultat de détection en utilisant le commutateur (31, 41, 61), et
dans lequel l'unité de commande (20) règle un seuil pour le cas où il est détecté par le commutateur (31, 41, 61) que l'opérateur tient le dispositif d'affichage à une valeur inférieure à un seuil pour le cas où il n'est pas détecté que l'opérateur tient le dispositif d'affichage.

2. Dispositif d'affichage selon la revendication 1, dans lequel le commutateur (31, 41, 61) est prévu dans une marge du dispositif d'affichage et dans un côté inférieur gauche de l'unité d'affichage d'image (17) dans une vue de face.

3. Dispositif d'affichage selon la revendication 1, dans lequel le commutateur (31, 41, 61) est prévu dans une marge du dispositif d'affichage et dans un côté inférieur droit de l'unité d'affichage d'image (17) dans une vue de face.

4. Dispositif d'affichage selon la revendication 1, dans lequel le commutateur (31, 41, 61) est prévu dans une marge du dispositif d'affichage et à droite et à gauche en dessous de l'unité d'affichage d'image (17) dans une vue de face.

5. Dispositif d'affichage selon l'une quelconque des revendications 1 à 4, dans lequel :
le commutateur comprend un premier commutateur (41a) et un deuxième commutateur (41b) ;
l'unité de commande (20) règle le seuil à un premier seuil lorsqu'il est détecté que le premier commutateur (41a) et le deuxième commutateur (41b) sont désactivés, règle le seuil à un deuxième seuil lorsqu'il est détecté que seul le premier commutateur (41a) est activé et règle le seuil à un troisième seuil lorsqu'il est détecté que le premier commutateur (41a) et le deuxième commutateur (41b) sont tous deux activés ; et
le troisième seuil est une valeur inférieure au deuxième seuil et le deuxième seuil est une valeur inférieure au premier seuil.

6. Dispositif d'affichage selon la revendication 5, dans lequel le premier commutateur (41a) est prévu dans une marge du dispositif d'affichage et dans l'un d'un côté inférieur droit et d'un côté inférieur gauche de l'unité d'affichage d'image (17) dans une vue de face, et le deuxième commutateur (41b) est prévu dans l'autre côté de l'unité d'affichage d'image (17).

7. Dispositif d'affichage selon l'une quelconque des revendications 1 à 4, comprenant en outre une unité de stockage (11, 51) qui stocke plusieurs types de dispositions d'icônes,
dans lequel l'unité de commande (20) règle le seuil à une valeur différente en fonction du résultat de détection en utilisant le commutateur (31, 41, 61) et affiche la disposition d'icônes correspondant au résultat de détection en utilisant le commutateur (31, 41, 61) sur l'unité d'affichage d'image (17).

8. Dispositif d'affichage selon la revendication 7, dans lequel l'unité de commande (20) affiche une disposition de fonctionnement à une seule main sur l'unité d'affichage d'image (17) lorsqu'il est détecté que l'opérateur tient le dispositif d'affichage, la disposition de fonctionnement à une seule main étant une disposition d'icônes dans laquelle des icônes de fonctionnement sont agencées à proximité du commutateur (31, 41, 61).

9. Dispositif d'affichage selon la revendication 8, dans lequel les icônes de fonctionnement sont agencées en ligne dans la disposition de fonctionnement à une seule main.

10. Dispositif d'affichage selon la revendication 8, dans lequel les icônes de fonctionnement sont agencées en une pluralité de lignes dans la disposition de fonctionnement à une seule main.

11. Dispositif d'affichage selon la revendication 8, dans lequel les icônes de fonctionnement sont agencées en forme d'arc dans la disposition de fonctionnement à une seule main.

12. Dispositif d'affichage ayant un panneau tactile capacitif (18) qui détecte un changement de capacité, devant une unité d'affichage d'image (17), le dispositif d'affichage comprenant :
une unité de commande (20) qui règle un seuil à comparer à une variation d'une capacité détectée par le panneau tactile (18) pour déterminer si le panneau tactile (18) fonctionne ; et
un commutateur (31, 41, 61) qui amène l'unité de commande (20) à détecter que le dispositif d'affichage est fixé à un support (81, 82),
dans lequel l'unité de commande (20) règle le seuil à une valeur différente en fonction d'un résultat de détection en utilisant le commutateur (31, 41, 61), et
dans lequel l'unité de commande (20) règle un seuil pour le cas où il est détecté par le commutateur (31, 41, 61) que le dispositif d'affichage est fixé au support (81, 82) à une valeur supérieure à un seuil pour le cas où il n'est pas détecté que le dispositif d'affichage est fixé au support (81, 82).
